# EUROPEAN PATENT SPECIFICATION

(11) **EP 2 956 388 B1**
(45) Date of publication and mention of the grant of the patent: **05.04.2017**
(21) Application number: 14705603.0
(22) Date of filing: 12.02.2014
(51) Int. Cl.: B65D 85/804

(54) **CAPSULE AND SYSTEM FOR PREPARING A BEVERAGE**
KAPSEL UND SYSTEM ZUR HERSTELLUNG EINES GETRÄNKS
SYSTÈME ET PROCÉDÉ DE PRÉPARATION DE BOISSON

(30) Priority: 12.02.2013 EP 13154958
(43) Date of publication of application: 23.12.2015
(73) Proprietor: Koninklijke Douwe Egberts B.V., 3532 AD Utrecht (NL)
(72) Inventor: BIESHEUVEL, Arend Cornelis Jacobus, 3532 AD Utrecht (NL); KAMERBEEK, Ralf, 3532 AD Utrecht (NL); NURACHMAN, Affan, 3532 AD Utrecht (NL); VAN BERGEN, Cornelis, 3532 AD Utrecht (NL)
(74) Representative: V.O.
(86) International application number: PCT/NL2014/050086
(87) International publication number: WO 2014/126464

(56) References cited:
- EP-A1- 2 230 195
- EP-A1- 2 537 778
- WO-A1-2012/007257
- FR-A5- 2 041 380
- GB-A- 2 488 799
- US-A1- 2006 236 871
- US-A1- 2010 154 644
- US-A1- 2010 239 717
- US-A1- 2011 315 021
- US-A1- 2012 070 551

## Description

The invention relates to a capsule for preparing a predetermined quantity of beverage suitable for consumption using an extractable product, for instance roast and ground coffee, the capsule comprising a substantially rigid circumferential wall, a bottom closing the circumferential wall at a first end, and a lid closing the circumferential wall at a second, open, end opposite the bottom, wherein the circumferential wall, the bottom and the lid enclose an inner space comprising the extractable product, wherein the lid comprises a flexible foil having a plurality of exit openings defining an exit area for draining of the prepared beverage.

Such a capsule is for instance known from WO2010137953 and can be used in an apparatus for preparing a beverage. Such a capsule provides convenience in use as well as reproducible extraction conditions, resulting in easy preparation of a cup of coffee with a constant quality. Since the known capsule comprises a flexible foil with a plurality of exit openings defining the exit area for draining of the prepared beverage, this capsule is known as an open capsule. Such a capsule can be used in a beverage production apparatus in which a liquid under pressure enters the capsule via the bottom in order to interact with the extractable product in the capsule. Upon interaction of the liquid and the extractable product the beverage is obtained. During preparation of the beverage, the foil will keep intact such that the prepared beverage leaves the capsule via the exit openings provided in the lid and the roast and ground coffee remains inside the capsule. However, applicant found that due to the material of the lid defining the exit area only limited possibilities regarding the coffee parameters of the capsule for brewing coffee are available. Therefore, varying with different coffee flavours may be limited as well. When preparing a beverage, coffee particles inside the capsule may move towards the foil during supply of the fluid inside the capsule which particles may contribute to the creation of a flow restriction. However, also the fine particles may displace and end up in accumulating in front of or covering at least part of the exit openings in the foil. This may be disadvantageous because the flow restriction may be come too high. The brewing time of the beverage when using said known capsule may be relatively long, which may be inconvenient for a user of the beverage production apparatus. Besides, when using the known capsule small particles, i.e. so called fines, of the roast and ground coffee may end up in the prepared beverage, which may lead to a coffee with an inferior quality.

Therefore, it is an object of the invention to provide an improved open capsule for the preparation of a beverage and more specifically to diminish at least part of the above mentioned problems.

Thereto, a first aspect of the invention relates to a capsule according to claim 1. Thus, a capsule of the above described type is provided, wherein inside the capsule between the extractable product and the lid a substantially sheet shaped filter layer is provided, wherein at least one exit opening is covered by the filter layer and at least one exit opening is not covered by the filter layer, and wherein the at least one exit opening which is not covered by the filter layer directly faces the extractable product.

By providing a filter layer between the extractable product, i.e. roast and ground coffee, and the foil with exit openings of the lid, the smallest particles of the roast and ground coffee, i.e. the fines, are caught by the filter layer material. The fines will spread in the filter layer before said particles will reach the exit openings in the foil. Since at least not all fines will reach the exit openings, a desired flow restriction, thus not restricting the water flow too much, is obtained. When using the improved coffee capsule, the process of preparing a beverage may be better controllable and thus better reproducible. With such an improved capsule the extraction conditions of the coffee may be improved. The cooperation between the foil with exit openings and the additional filter layer enables the possibility to vary with the coffee parameters such as the amount of coffee and the dimensions of the coffee particles, which may for instance be advantageous to prepare coffee with different coffee flavours. Applicant found that the capsule according to the invention may especially be used to advantage when comprising coffee particles that are brittle and thus comprise a large amount of fines. For instance, decaffeinated coffee particles may comprise a relative large amount of fines.

Due to the filter layer, accumulating of the fines and/or covering of the exit openings is minimized. As the liquid under pressure enters the capsule via the bottom (which may be provided with inlet openings such as slits or may be opened by a coffee apparatus) in order to interact with the extractable product, the extractable product may be compacted. The presence of a filter layer between the extractable product, i.e. roast and ground coffee, and the foil with exit openings of the lid, may allow a preferred flow to form through the filter layer, because the flow resistance through the filter layer is smaller than the flow resistance through the compacted extractable product. This preferred flow also positively influences the brewing time of a beverage. Also excessive compression of the coffee bed is minimized. Also area of compacted coffee in the prior art capsule is now filled with filtering paper, thereby providing a lower flow resistance in such area. As the liquid under pressure enters the capsule via the bottom in order to interact with the extractable product, the extractable product may be compacted. The presence of a filter layer between the extractable product, i.e. roast and ground coffee, and the foil with exit openings of the lid, may allow a preferred flow to form through the filter layer, because the flow resistance through the filter layer is smaller than the flow resistance through the compacted extractable product. This preferred flow also positively influences the brewing time of a beverage. Furthermore, the improved capsule enables brewing of coffee with a brewing time that is better controllable. For instance, to prepare a coffee lungo, the brewing time may be between 40-50 seconds instead of between 38-55 seconds as with the known prior art capsule. Thus, the brewing time range will be smaller. Since the fine particles of the roast and ground coffee are captured by the filter layer, these particles will not end up in the prepared beverage. The applicant also found that the fine particles will not end up in the foam layer of the prepared beverage. Due to the low amount of fines or absence of fines in the foam layer of the beverage, the foam layer is of a better quality than when using a prior art capsule without an additional filter layer. The foam layer is more stable, has a cleaner appearance and has a more uniform distribution of air bubbles. It is noted that "foam layer" refers to the crema layer that is provided on top of the prepared beverage. It was surprisingly found that due to preventing the fines from reaching the foil, the capsule can be filled with a larger amount of coffee, and/or coffee with smaller particles may be used.

The capsule according to the invention has a positive effect on the brewing time of the coffee and on the amount of dry matter comprised in the prepared beverage. When preparing coffee using a capsule according to the invention, the prepared coffee comprises more dry material (DMA), for instance approximately 15%, with respect to the described known open capsule. Furthermore, the amount of oil in the prepared coffee may be greatly reduced. This results in a coffee beverage of high quality. Since the foil stays intact during preparation of the beverage, the filter layer that is provided between said foil and the roast and ground coffee thus will also stay intact during preparation of the beverage. Furthermore, according to the present invention at least one exit opening is not covered by the filter layer. It has been found that if some of the exit openings in the foil are not covered by the filter layer, the brewing time may still be advantageously reduced, yet a sufficient amount of dry matter is present in the prepared coffee, and a desired flow restriction is obtained to create an acceptable crema layer.

Preferably, the substantially sheet shaped filter layer comprises a layer of paper filtering material, a layer of non-woven material or a layer of woven material. Preferably, the sheet shaped filter layer comprises a layer of paper filtering material or a layer of non-woven material. Such paper filtering material may comprise relatively small pores, at least smaller than the exit openings of the foil, which pores are adapted to retain the small particles of the roast and ground coffee before reaching the exit openings.

It is noted that WO2010137952 and WO2010137963 both disclose a capsule for preparing a predetermined quantity of beverage suitable for consumption, wherein the capsule may be an open capsule comprising a lid having an exit area for draining prepared beverage from the capsule. In both publications, the lid may comprise multiple layers of suitable porous and/or perforate material. However, the problem of accumulating of the fines that may cover the openings of the exit area is not recognised nor a suitable combination of layers is suggested to overcome said problem.

In further elaboration of the invention, the filter layer preferably extends substantially parallel along the lid at least across the maximal transversal cross section of the second open end of the capsule. The filter layer may comprise an opening in a centre area thereof such that the filter layer covers part of the exit openings in the foil. Alternatively, the filter layer may comprise one or more openings, possibly provided in a pattern, such as circular openings, rectangular openings and/or triangular openings. An advantage of using a filter layer with such a configuration is that during manufacturing of a capsule according to the invention, the filter layer does not have to be positioned relative to the flexible foil of the capsule.

According to a further aspect of the capsule according to the invention, the filter layer may abut against the lid. The filter layer may be provided against the lid and may stay at the desired location due to the fact that it is pressed tightly between the roast and ground coffee and the lid. Then the filter layer does not have to be connected to the capsule and/or the lid. Instead, the filter layer may be connected at a circumferential edge of the filter layer, preferably adjacent a circumferential edge of said lid. In another embodiment of the capsule according to the invention, the filter layer may be connected to the lid along the entire surface of the filter layer. The assembly of the filter layer and the lid can be prefabricated such that it can be mounted to the capsule in a single operating step. When connecting the filter layer to the lid, at least partly, the circumferential edge of the filter layer may be enclosed between the lid and an outwardly extending rim of the capsule. The filter layer may extend along the entire radial length of the outwardly extending rim such that the lid is connected to the rim via the filter layer. Alternatively, the filter layer may only extend along part of the radial length of the outwardly extending rim. Then, the lid is connected directly to the rim along the part of the radial length thereof that is not covered by the filter layer. It was found that if the filter material of the filter layer is relatively thin, the filter layer may be kept in position by the sealed connection between the foil and the rim. When the outer circumferential edge of the filter layer is connected to the rim or to the flexible foil, prepared beverage will not bypass the filter layer. The filter layer may have a thickness of approximately between 10µm-1mm, preferably between 50µm-0.2mm. The filter layer may also have a thickness in the range of 0.2mm- 10 mm, preferably 0.2 mm- 5mm, more preferably 0.2-2mm while excluding 0.2 mm from such range. In another embodiment of the invention, the filter layer may comprise sealing properties for enhancing the sealing capability thereof.

To obtain the desired spreading of the small particles of the roast and ground coffee along the filter material, it may be advantageous if the paper filtering material is of paper having a weight of approximately 1-250 grams/m2, more preferably between 10-100 grams/m2, preferably approximately 15-50 grams/m2. Alternatively, the filter layer may comprise a non-woven material layer comprising a synthetic material, for instance comprising high density polyethylene (HDPE). An example of such a filter material is Tyvek. Such a non-woven material layer may comprise a similar thickness and weight as above indicated with the paper filtering material. In a further alternative embodiment, the filter layer may comprise a screen of woven or non-woven material. The screen may for instance be of a plastic material, such as PE, or of a metal, for instance a thin layer of aluminium.

The paper filtering material or the non-woven material of the filter layer may have an air permeability of maximal 550 mm/second measured at a pressure of approximately 200 Pascal. Such air permeability is indicative of filtering properties that enhance retaining the fines to prevent said fines from reaching the exit holes in the foil. It is noted that the air permeability is measured with an Akustron Air Permeability Tester that is configured to measure air permeability of filter papers, nonwovens and textile fabrics within a range of 10-3000mm/second at Δp=200 Pascal.

In order to enhance the sealing properties of the filter layer for sealing it to the foil, the filter layer material may comprise a plastic or may be coated. In that case preferably the coating or plastic faces the foil. For instance, the filter layer may be provided with polyethylene (PE) or another suitable plastic.

In an alternative embodiment, the filter layer may be connected to the foil at one surface of the filter layer and to another foil layer provided on an opposing surface of the filter layer. Such further foil layer may comprise openings that are slightly larger than the openings in the lid and much larger than the pores in the filter layer. Such an exit layer may be prefabricated and easily connected to the capsule body.

The foil of the lid may be configured to stay in tact when being used in an apparatus that comprises lid piercing means intended for piercing a lid of a closed capsule, i.e. a capsule at least comprising a closed lid. The tear strength and stiffness of the foil may thus be chosen such that rupture of the foil against the lid piercing means under the influence of e.g. fluid pressure is prevented.

In an embodiment of the invention, the foil may be a multilayer foil. The multilayer foil may comprise a first material layer and a second material layer. The first layer may have a higher stiffness than the second layer and the second layer may have a higher tear strength than the first layer. The first layer may be of polyethylene terephthalate (PET-P) and the second layer may be of co-polymer polypropylene (CPP). Preferably, the layer of PET-P has a thickness of approximately 15µm and the layer of CPP has a thickness of approximately 30µm. The layer of CPP may have higher tear strength than the layer of PET-P. The layer of PET-P may have a higher stiffness than the layer of CPP. These layers are bonded together. Such a multilayer foil avoids the rupture of the lid under the influence of e.g. fluid pressure.

The exit area of the foil may for instance comprise 50-250 openings, preferably 70-190, more preferably 100-160 openings. The open surface of the foil, i.e. the total surface of the openings, may be approximately between 0.4-49.1mm². The average diameter of the exit openings may be between 0.1 and 0.5mm. The foil may comprise a combination of openings with different diameters and/or provided in different patterns. Such a foil may form a sufficiently low flow resistance to prevent tearing of the lid of the capsule during preparation of the beverage which is advantageous for controlled preparation of the beverage. As mentioned before, due to the foil, the filter layer will stay intact as well.

The capsule according to the invention is suitable for preparing a predetermined amount of beverage by supplying a predetermined amount of hot water under high pressure to the capsule, thereby extracting the beverage ingredient with the supplied water. For instance, the exchangeable capsule may comprise a predetermined amount of beverage ingredient, for instance 4-11 grams, preferably 5-8 grams, more preferably 5.3-6 grams. Such a capsule is suitable and intended, for preparing a single portion of the beverage, preferably a single cup of the beverage, e.g. from 20-30 ml excluding 30 ml or 30-200ml of the prepared beverage. The exchangeable capsule, thus, is a single-portion-pack. The exchangeable capsule according to the invention may be a disposable capsule. Preferably, the capsule inner space may have a volume of approximately 10-20 ml, preferably 11 - 18 ml. A capsule for instance for preparing an espresso may have an inner space of approximately 12 ml. To enable the liquid entering the capsule, the bottom of the capsule may comprise an entrance filter, for instance a substantially rigid bottom comprising a plurality of entrance openings or for instance of a porous sheet, such as a sheet of paper or the like non-woven material, or a perforate sheet, such as a polymeric film provided with a plurality of entrance openings, for supplying the fluid to the extractable product there through. The entrance filter may, for example, comprise a substantially rigid bottom with slits. In an embodiment, the slits may extend from a centre of the bottom radially outward towards the outer circumferential edge of the entrance filter. In an alternative embodiment, the slits may be arranged in a different pattern. By providing the entrance opening with an entrance filter, spoiling roast and ground coffee for instance when removing the capsule from the apparatus is prevented as well. The entrance filter may comprise, at a centre area thereof, a recess. Such an entrance filter is for instance described in WO2012019902. The entrance filter may be configured to remain intact upon use of the capsule in an apparatus for preparing a beverage. Even if the apparatus comprises bottom piercing means to pierce a bottom of a closed capsule, the bottom of the capsule according to the invention can be configured to remain intact. In an alternative embodiment of the invention, the capsule may comprise a closed bottom that in use is pierced by the lid piercing means to provide a supply opening in the capsule to enable fluid supply to the capsule inner space. Preferably the inner space of the capsule has a volume of the capsule is 10-20 ml, preferably 11-18 ml, more preferably 10-13 ml excluding approximately 12 ml or more preferably approximately 12 ml. This generally makes the capsule suitable for preparing one cup of a beverage.

According to the invention the at least one exit opening which is not covered by the filter layer directly faces the extractable product. This has as an advantage that, in use, the exit openings may be partly blocked by fines in the ingredient. If the exit openings are partly blocked, in use, there will be a raise of pressure if water under pressure (for example 1-20 bar) is submitted into the capsule. This raise of pressure has as a result that gases may escape from the extractable product if the extractable product is ground coffee. These gasses provide a crema layer on top of the beverage if the beverage is collected in a cup. The filter layer makes sure on the other had that the exit openings which are not covered by the filter layer are not blocked to such an extend that the brewing time becomes unacceptable high such as for example around 55-65 seconds. It is believed that due to the relatively low flow resistance of the filter layer a flow rate of the fluid in the capsule may increase which may have as a result that the exit openings which are not covered by the filter layer are not blocked to an unacceptable extend. Also the brewing time does not become unacceptable small so that the amount of DMA in the beverage would become to small. Thus by dimensioning the size of the filter layer, the amount and positions of the exit openings and the size of the exit openings depending on the type of ingredient a well balanced process for brewing the beverage is obtained.

According to the invention at least one exit opening is not covered by the filter layer. Preferably, a plurality of exit openings are not covered by the filter layer. It has been found that if at least one of the exit openings in the foil is not covered by the filter layer, or if a plurality of the exit openings in the foil is not covered by the filter layer, the brewing time may still be advantageously reduced, yet a sufficient amount of dry matter is present in the prepared coffee, and a desired flow restriction is obtained to create an acceptable crema layer.

According to the invention the at least one exit opening which is not covered by the filter layer directly faces the extractable product. Optionally, the plurality of exit openings which are not covered by the filter layer directly faces the extractable product. Directly faces implies that an exit opening is not covered by a separate sheet such that such opening is adjacent to or substantially abuts against the extractable product. The at least one uncovered exit opening or the plurality of uncovered exit openings may however be separated from the extractable product by an empty space. However, it will be appreciated that this space is free from additional elements or materials. In this way, in use, a desired flow restriction is obtained by a build-up of fines reaching the at least one uncovered exit opening or the plurality of exit openings that directly faces the extractable product.

It will be appreciated that the chosen plurality of exit opening which are not covered by the filter layer and the chosen at least one or plurality of exit opening which are covered by the filter layer may be dependent on the extractable product on the one hand and the desired characteristics of the beverage on the other hand. A property of the extractable product may for example be the amount of fines in the extractable product or the amount of extractable product in the capsule. A property of the beverage may for example be the height of the crema layer. Also the brewing time may be an important factor.

For example, leaving a first set of exit openings uncovered by the filter layer may result in a beverage having a sufficient high crema layer in the beverage due to a sufficient high pressure build up in the capsule during brewing. By covering exit openings this will have a positive effect on brew time and, in use, a complete blocking of the capsule due to an increased amount of ingredients in the capsule for obtaining an increased amount of DMA in the beverage can be avoided.

Preferably, according to a first design feature the plurality of exit openings which are not covered by the filter layer form x% of the total number of exit openings and wherein the at least one exit opening which is covered by the filter layer or the plurality of exit opening which are covered by the filter layer form (100-x)% of the total number of exit openings wherein x lays in the range of 29-99.5, preferably in the range of 44-99.5, more preferably in the range of 54-99.5. In this way a percentage x of the total number of exit openings are not covered by the filter layer, and a percentage (100-x) of the total number of exit openings are covered by the filter layer. During brewing the particles of the extractable product in the capsule may move towards the foil when the fluid is supplied to the inside of the capsule. Exit openings which are uncovered are more susceptible to accumulation of fines in front of the exit opening.

Without wishing to be bound by any theory, the applicant has found that uncovered exit openings contribute substantially to the creation of the flow restriction. The brew time, crema layer of the brewed beverage, and the amount of dry matter present in the brewed beverage is related to the magnitude of the flow restriction. The percentage of exit openings which are covered by the filter layer also contribute to the creation of the flow restriction but to a lesser extent than the exit openings which are not covered by the filter layer, as the brewed beverage must still pass through the covered exit openings, however fines moving towards these covered exit openings may be caught by the filter layer.

In addition, it is believed that the presence of the filter layer allows for a preferred flow to form through the filter layer. In this way brewed beverage flowing through the filter layer may more easily exit the capsule though an exit opening covered by the filter layer.

Variation of the percentage of exit openings which are not covered and which are covered results in a variation in the brewing properties of the brewed beverage, specifically in brew time, the thickness of the cream layer, and the amount of dry matter present in the brewed beverage.

It has been found when x is in the range of 29-99.5, preferably in the range of 44-99.5, more preferably in the range of 54-99.5, a desirable brewed beverage is achieved.

Preferably, according to a second design feature the surface of the foil which is not covered by the filter layer comprises p% of the total surface area of the foil which forms a boundary of the inner space of the capsule wherein p lays in the range of 10-85, preferably in the range of 30-80, more preferably in the range of 38-75. In this way, only a percentage of the total surface area of the foil is covered by the filter layer. The applicant has found that this parameter also influences the resulting brewing properties, such as brew time of the beverage, the thickness of the crema layer and the amount of dry matter present in the brewed beverage. In this regard, it is believed that that the presence of the filter layer whether or not it covers an exit opening allows for a preferred flow to form through the filter layer. As the liquid under pressure enters the capsule via the bottom in order to interact with the extractable product, the extractable product is compacted. The presence of a filter layer between the extractable product, i.e. roast and ground coffee, and the foil with exit openings of the lid, may allow a preferred flow to form through the filter layer, because the flow resistance through the filter layer is smaller than the flow resistance through the compacted extractable product. Such a preferred flow has a relatively high flow rate due to the relatively low flow resistance of the filter layer when compared for example with the flow resistance of the coffee in the capsule when it is compacted during brewing. This preferred flow also positively influences the brewing time of a beverage. It has been found when p is in the range of 10-85, preferably in the range of 30-80, more preferably in the range of 38-75, acceptable brewing properties are achieved.

Preferably the capsule is designed so that it fulfils at least the first design feature or at least the second design feature. In each case better result are obtained as discussed. Even more preferably the capsule is designed so that it fulfils at least both design features. In that case even better results are obtained. It will be clear that there are numerous embodiments which may fulfil the requirements of the first and/or second design feature. Thus the filter layer may have several shapes and dimensions. Also the position of the filter layer within the capsule may vary. The same applies to the number of exit openings and the position of the exit openings. These may also be varied, possibly in combination with said variations in the filter layer. The filter layer may also consist of a plurality of filter layer pieces which lay in one and the same plane parallel to the plane of the foil. Within the scope of all these possibilities several special embodiments can be realised.

When referring to the total surface area of the foil, reference is made to the total surface area of the foil which forms a boundary of the inner space of the capsule. In other words the total surface area of the foil is the surface area of the foil bounded by the inside of the circumferential wall of the capsule. The foil may extend over the circumferential wall in order to facilitate sealing of the foil to the capsules. This surface area of the foil is not included in total surface area of the foil which forms a boundary of the inner space of the capsule.

Furthermore, it will be appreciated that adjacent to the circumferential wall, specifically measured along the surface area of the foil which forms a boundary of the inner space of the capsule, is understood to mean at a distance smaller than 3% of the diameter of the surface area of the foil which forms a boundary of the inner space of the capsule at the second open end.

It may be desirable that the plurality of exit openings which are not covered by the filter layer are distributed evenly over at most p% of the total surface area of that part of the foil which forms a boundary of the inner space of the capsule. Additionally or alternatively, it may be desirable that the plurality of exit openings which are covered by the filter layer are distributed evenly over at most (100-p)% of the total surface area of the foil which forms a boundary of the inner space of the capsule. In this way, the effect of the plurality of exit openings not covered by the filter layer and the effect of the plurality of exit opening covered by the filter later is distributed over p% of the surface area of the foil and (100-p)% of the surface area of the foil respectively. It follows from an aspect of the invention that at least one and possibly a plurality of the exit openings are covered. If a portion of an exit opening is covered by the filter layer then this means that the exit opening is covered by the filter layer.

Optionally the plurality of exit openings which are not covered by the filter layer are distributed over R*p% of the total surface area of the foil which forms a boundary of the inner space of the capsule and the plurality of exit openings which are covered by the filter layer are distributed over Q*(100-p)% of the total surface area of the foil which forms a boundary of the inner space of the capsule. Preferably, R is within the range of 0.9-1 or is equal to 1 and Q lays in the range of 0.05-1, preferably in the range of 0.25-0.9, more preferably in the range of 0.25-0.6. This may, for example, apply if the filter layer has the form of a ring which, for example, is positioned concentric with the surface area of the foil forming the boundary of the inner space. Embodiments describing a ring-shaped filter layer are discussed later on.

Alternatively, R is larger than 0.4 and Q is smaller or equal to 1.This may, for example, apply if the filter layer has the form of a strip which, for example, extends over a centre of the foil. Embodiments describing a strip-shaped filter layer are discussed later on.

If Q=1 exit openings, which are covered, are distributed over the full area where the foil is covered by the filter layer. It may however be that the exit openings are not distributed over the full area where the foil is covered by the filter layer. Experiments have however shown that the exit openings may also lay in only a portion of the area of the foil which is covered by the paper layer. It has for example been found that it may be beneficial if a circumferential area of the foil which is adjacent to the circumferential wall is not provided with the exit openings wherein this area is however covered by the filter layer in addition to other areas which are provided with exit openings and which are covered by the filter layer provides a reduced brewing time on the one hand without substantially lowering the amount of DMA in the beverage on the other hand.

If R=1 exit openings, which are not covered, are distributed over the full area where the foil is not covered by the filter layer. It is believed that leaving a sufficient amount of exit openings uncovered with provide a positive distribution to the creation of a foam layer and the amount of DMA in the beverage.

Optionally, a first type of portion of the surface area of the foil wherein the plurality of exit openings are distributed which are not covered by the filter layer lays at least substantially completely at a distance from the circumferential wall. The applicant found that by positioning the first type of portion of the surface area of the foil at a distance from the circumferential wall a desired (average) flow resistance within the capsule is obtained. Probably this may be caused by the exit openings laying in the first type of portion of the surface area of the foil being at least partially blocked by fines.

Optionally, a third type of portion of the surface area of the foil which is covered by the filter layer lays at least substantially completely adjacent to the circumferential wall. The applicant has found that positioning the filter layer at least substantially completely adjacent to the circumferential wall has a positive effect on the forming of a preferred flow though the filter layer. Without wishing to be bound by any theory, it is believed that during brewing as the fluid under pressure enters the capsule via the bottom in order to interact with the extractable product a preferred flow forms along the circumferential wall. In this way by placing the filter layer at least substantially completely adjacent to the circumferential wall the preferred flow, which has formed along the circumferential wall may continue through the filter layer. During brewing, the filter layer has a lower flow resistance than the compacted bed of extractable product inside the capsule in an area adjacent to the foil of the capsule. It is noted a preferred path through the filter layer includes a preferred path extending parallel to the circumferential wall as well as a preferred path extending radially inward from the circumferential wall parallel to the foil.

Optionally, at least a% of the length of an outer boundary of a first type of portion of the surface area of the foil wherein the plurality of exit openings are distributed which are not covered by the filter layer lays at a distance from the circumferential wall, wherein a is greater than 50, preferably greater than 85, more preferably greater than 95 and wherein a is most preferably 100 and wherein a distance is defined as 5-30% from a diameter of the inner space adjacent the foil. If a=100, the first type of portion of the surface of the foil be seen an island relative to the circumferential wall, if a is smaller than 100 it could be a peninsula relative to the circumferential wall. The applicant has found that that during brewing, according to this embodiment the preferred flow, which has formed along the circumferential wall probably has to deflect in order to flow toward the exit openings in the first type of portion of the surface area of the foil which may result in a better extraction. This feature may also improve the amount of cream layer on top of the prepared beverage in a cup.

The first type of portion is most preferably located at a distance from the circumferential wall for 100% of its outer boundary. It is noted that the plurality of exit openings distributed in the first type of portion are not covered by the filter layer. In this way, in use, a build-up of fines at the plurality of exit opening distributed in the first type of portion occurs. This results in a positive effect on the creation of a flow restriction.

In the case that a third type of portion of the surface area of the foil which is covered by the filter layer lays at least substantially completely adjacent the circumferential wall is also present in the capsule, it is believed that during brewing, the preferred flow, which has formed along the circumferential wall may continue through the filter layer covering the third type of portion of the foil, guiding the preferred flow radially inwards towards the first type of portion of the foil having a plurality of exit openings distributed in it.
Optionally, the outer boundary of the first type of portion of the surface is the only boundary of the fourth portion of the surface. In this way, the fourth portion is island shaped.

As an alternative at least a% of the length of an outer boundary of a fourth type of portion of the surface area of the foil wherein the plurality of exit openings are distributed which are covered by the filter layer lays adjacent to the circumferential wall, wherein a is greater than 50, preferably greater than 85, more preferably greater than 95 and wherein a is most preferably 100. In such embodiment the preferred flow along the sidewall may continue its path into the filter layer and may leave the capsule via the exit openings laying in the fourth type of portion. Possibly other exit openings which are not covered by the filter layer may be partly blocked so that on average a good brewing time, crema layer and DMA can be obtained.

Alternatively b'% of an outer circumferential boundary of a fourth type of portion of the surface area of the foil wherein the plurality of exit openings are distributed and which is covered by the filter layer lays at a distance from the circumferential wall, wherein b' is greater than 50, preferably greater than 85, more preferably greater than 95 and wherein b' is most preferably 100 and wherein a distance is defined as 5-15% from a diameter of the inner space adjacent the foil. The higher b'1 the relatively more the fourth type of part lays at a distance from the circumferential wall. The applicant has found that that during brewing, according to this embodiment the preferred flow, which has formed along the circumferential wall may deflect to continue to flow in an inwardly radial direction towards and subsequently through the filter layer covering the fourth portion of the foil, and exit through the plurality of exit openings distributed over the fourth portion of the foil. It is in that embodiment preferred that a fifth type of portion of the surface area of the foil which is covered by the filter layer and which does not comprise exit openings is also present and lays at least substantially completely adjacent to the circumferential wall and preferably between the circumferential wall and the fourth type of portion. It is believed that during brewing, the preferred flow, which has formed along the circumferential wall may continue through the filter layer covering the fifth type of portion of surface of the foil, and be guided into the filter layer coving the fourth type of portion of the surface of the foil, and exit through the plurality of exit openings distributed over the fourth type of portion of the surface of the foil and optionally over exit openings laying in a first type of portions of the surface of the foil.

Preferably the fifth type of portion of the surface of the foil surrounds the fourth type of portion of the surface of the foil. Even more preferably the fifth type of portion of the surface of the foil surrounds and lays adjacent the fourth type of portion of the surface of the foil. In that case an inner boundary of the fifth type of portion of the surface of the foil and an outer boundary of the fourth type of portion of the surface of the foil are adjacent or fall together.

Optionally, the fourth portion of the surface also comprises an inner boundary. In this way the fourth portion has an opening bounded by the inner boundary. Optionally, the inner boundary of the fourth portion lays at a distance from the side wall. In this way the opening formed by the inner boundary is at a distance from the side wall.

Possibly the third portion and the fourth portion are the same. In that case, exit opening are distributed over the entire surface area of the foil covered by the filter. Alternatively the third type of portion of surface area and the fourth type of portion of the surface area are not the same, wherein an circumferential area of the foil which is adjacent the circumferential wall forms a fifth type of area of the foil which is not provided with the exit openings and which is covered by the filter layer, said fifth type of surface area of the foil forming the difference between the third type of portion of the surface area and the fourth type of portion of the surface area. This embodiment provides a relatively short brewing time on the one hand and a relatively high amount of DMA in the beverage on the other hand. This may be caused by the fact that preferential flows near the circumferential wall can not direct leave the capsule through the foil near the circumferential wall if the fifth type of portion of the foil wherein no exit openings are present lays adjacent the circumferential wall as discussed. This fifth type of portion of the foil is believed to provide a fluid path with a relatively low flow resistance so that the flow near the side wall is deflected toward the fourth type of portion and may at least partly leave the capsule through the exit openings which are covered by the filter layer. If moreover a first type if portion is present the fluid may also leave the capsule through exit openings which are not covered by the filter layer and which openings may be at least partly blocked by fines. The latter will provide a raised pressure in the capsule so that a crema layer is created on the beverage in a cup wherein the beverage is received. Preferably in such embodiment the outer boundary of the first type of portion of the surface of the foil coincides with the inner boundary of the fifth portion of the surface area of the foil. The fifth type of portion may however also be located at a distance from the side wall, for example if the filter layer has the form of a disk and lays on the foil at a distance form the side wall. The first type of portion may surround the third type of portion which comprises the fifth type of portion. In that case the flow of fluid in the direction from the entrance side of the capsule towards the fifth type of portion may be deflected into the filter layer and flows in a radial direction in the direction of the circumferential wall towards the exit openings. Again the flow through the filter layer is believed to be relatively easy due to the relative low flow resistance of the filter layer in the capsule during use. Thereby the speed of the fluid may be increased resulting in a prevention of the possible exit openings which are not covered becoming blocked to much so that the brewing time remains acceptable short on the one hand and the height of the crema layer on the beverage as well as the amount of DMA in the beverage becomes predictably and satisfactory.

In a preferred embodiment an outer boundary of a fourth type of portion of the surface area of the foil wherein the plurality of exit openings are distributed and which is covered by the filter layer lays at least substantially completely or completely at a distance from the circumferential side wall. In that case a fifth type of portion of the surface of the foil may be located between the fourth type of portion and the sidewall of the capsule.

In the case that, for example, either less that 50%, preferably 5%-40% and more preferably 20%-35% of the outer boundary of the fourth type of portion or less that 50%, preferably 5%-40% and more preferably 20%-35% of the fifth type of portion lays substantially adjacent to the circumferential wall, (this holds for example, if the filter layer has the form of a strip which, for example, extends over a centre of the foil), and/or in the case that, for example, the filter layer has the form of a strip which, for example, extends over a centre of the foil then preferably, according to the first design feature the plurality of exit openings which are not covered by the filter layer form x% of the total number of exit openings and wherein the at least one exit opening which is covered by the filter layer or the plurality of exit opening which are covered by the filter layer form (100-x)% of the total number of exit openings wherein x lays in the range of 29-79, preferably in the range of 44-72, more preferably in the range of 54-65.

Alternatively or additionally, in the case that, for example, either less that 50%, preferably 5%-40% and more preferably 20%-35% of the outer boundary of the fourth type of portion or less that 50%, preferably 5%-40% and more preferably 20%-35% of the fifth type of portion lays substantially adjacent to the circumferential wall, (this holds for example, if the filter layer has the form of a strip which, for example, extends over a centre of the foil), and/or in the case that, for example, the filter layer has the form of a strip which, for example, extends over a centre of the foil then preferably, according to the second design feature the surface of the foil which is not covered by the filter layer comprises p% of the total surface area of the foil which forms a boundary of the inner space of the capsule wherein p lays in the range of 40-85, preferably in the range of 55-80, more preferably in the range of 65-75.

In the case that, for example, either 50%-100%, preferably 80%-100% and more preferably 90%-100% of the outer boundary of the fourth type of portion or 50%-100%, preferably 80%-100% and more preferably 90%-100% of the fifth type of portion lays substantially adjacent to the circumferential wall (this holds for example, if the filter layer has the form of a ring which, for example, is positioned concentric with the surface area of the foil forming the boundary of the inner space) and/or in the case that, for example, the filter layer has the form of a ring which, for example, is positioned concentric with the surface area of the foil forming the boundary of the inner space then preferably, according to the first design feature the plurality of exit openings which are not covered by the filter layer form x% of the total number of exit openings and wherein the at least one exit opening which is covered by the filter layer or the plurality of exit opening which are covered by the filter layer form (100-x)% of the total number of exit openings wherein x lays in the range of 35-99.5, preferably in the range of 75-99.5, more preferably in the range of 93-99.5.

Alternatively or additionally, In the case that, for example, either 50%-100%, preferably 80%-100% and more preferably 90%-100% of the outer boundary of the fourth type of portion or 50%-100%, preferably 80%-100% and more preferably 90%-100% of the fifth type of portion lays substantially adjacent to the circumferential wall (this holds for example, if the filter layer has the form of a ring which, for example, is positioned concentric with the surface area of the foil forming the boundary of the inner space) and/or in the case that, for example, the filter layer has the form of a ring which, for example, is positioned concentric with the surface area of the foil forming the boundary of the inner space then preferably, according to the second design feature the surface of the foil which is not covered by the filter layer comprises p% of the total surface area of the foil which forms a boundary of the inner space of the capsule wherein p lays in the range of 10-85, preferably in the range of 30-70 more preferably in the range of 38-68.

Optionally, in order to optimise the quality of the beverage on the one hand and the brewing time on the other hand the filter layer fills c% of the volume of the inner space of the capsule wherein c lays within the range of 0.1-8, preferably within the range of 0.1-6.5, more preferably within the range of 0.1-3. By reserving a volume of the inner space of the capsule which is filled by the filter layer provides, in use, a volume of the capsule in which a preferred flow may be established and/or through which a preferred flow may flow.

Preferably the volume that the filter layer fills is located adjacent to the foil, or at least in the vicinity of the foil.

Optionally, a flow resistance of the filter layer is the same or higher than a flow resistance of the extractable product. Preferably a flow resistance of the filter layer is smaller than a flow resistance of the extractable product when being extracted with a fluid under a pressure of 9-18 bar.

Possibly a flow resistance of the filter layer is G times smaller than a flow resistance of the extractable product when being extracted with a fluid under a pressure of 9-18 bar wherein G lays in the range of 10-30, preferably in the range of 15-25 more preferably in the range of 18-22. G is estimated on the basis of modelling.

During brewing, as the liquid under pressure enters the capsule via the bottom in order to interact with the extractable product, the extractable product is compacted. Choosing the filter layer to have a flow resistance smaller than the compacted bed may allow a preferred flow to form and/or to continue. Influencing the preferred flow leads to more controllable brewing conditions. In this way an improved beverage can be obtained reliably. It has been estimated with the aid of modelling that a filter layer having a flow resistance of approximately estimated by modelling 20 times smaller than a flow resistance of the extractable product when being extracted is desirable. This also applies to such values provided elsewhere in this application.

It will be clear that, when being extracted, implies supplying a fluid under a pressure of G bar wherein G lays in the range of 4-20, preferably in the range of 6-19 more preferably in the range of 9-18. The fluid may be water. In this case the water under pressure may be supplied at a temperature higher than, for example, 70-90 degrees Celsius.

A flow resistance of the filter layer is preferably characterized by T wherein, while using a filter paper test device of the Herzberg design from Schroder Pruftechnik, T is the time in seconds for 100 ml of water to flow through an area of 10 cm2 of a sample of the filter layer in a direction perpendicular to a plane wherein the sample lays, with a starting water column of 33 cm, wherein the water temperature is at 20 degree C, wherein T lays in the range of 4-150, preferably 4-30, more preferably 5-20, for example in the range of 4-15 for filtering paper, for example in the range of 60-150 for white non woven and for example in the range of 45-80 for blue non woven. Preferably the density of the extractable product is D gr/cm3, wherein D lays in the range of 0.278-0.5, preferably within the range of 0.313-0.455, more preferably in the range of 0.379-0416. In that case the filter layer may influence the flow path of the fluid in the capsule

Preferably the extractable product is ground coffee and wherein an average particle size of the extractable product is E micro meter wherein E lays in the range of 100-1000, preferably within the range of 200-750, more preferably in the range of 250-500.

Preferably the particles of the extractable product comprises L% fines in volume wherein L lays in the range of 7-60, preferably within the range of 8-30, more preferably in the range of 10-20. Fines are understood to be particles smaller than 100 µm. In this application the measurement of the amount of fines is carried out with a Sympatec laser diffraction apparatus with a r6 lens.

By providing a filter layer, the applicant found that more possibilities regarding the coffee parameters of the capsule for brewing coffee are available. Different densities, average particle sizes, and/or percentages of fines of the extractable product may be used, while maintaining a brewing process that is reproducible and/or controllable. Additionally, an improved cup of coffee may be obtained having desired dry matter amount, crema layer and an acceptable brewing time for the user.

In the discussed embodiments the exit area of the foil (24) may for example comprises 50-250 openings (25), preferably 70-190, more preferably 100-160 openings. Also preferably an average open area of the exit opening is z mm2 per exit opening, wherein z lays in the range of 0.008-0.2, preferably in the range of 0.03-0.13, more preferably in the range of 0.05-0.1. An average largest diameter d of each exit opening may be 300 µm per exit opening, an average diameter may be d µm wherein d lays in the range of 100-500, preferably in the range of 200-400, more preferably in the range of 250-350. A total exit area the foil, defined by the number of exit openings and the open area of the exit openings, may be f mm² wherein f lays in the range of 1-13, preferably in the range of 4-11 and more preferable in the range of 6-9.

In a practical embodiment the filter layer has the shape of a ring wherein an outer circumferential boundary of the filter layer lays adjacent the circumferential wall and wherein preferably the centre area has a cross section of S mm wherein S lays in the range of 45-85, preferably in the range of 50-80 and more preferably within the range of 60-75 and wherein preferably the outer diameter of the portion of the filter layer which forms a boundary of the inner space has a cross section of about 28-30mm and/or wherein preferably the diameter of the inner space near the foil is about 28-30mm.

When the filter layer is ring shaped and the outer circumferential boundary of the filter layer lays adjacent to the circumferential wall, it is believed that as the liquid under pressure enters the capsule via the bottom in order to interact with the extractable product a preferred flow forms along the circumferential wall. The preferred flow, which has formed along the circumferential wall may continue through the ring shaped filter layer laying adjacent to the circumferential wall. The filter layer may guide the preferred flow radially inwards towards the plurality of exit openings.

Alternatively the filter layer has the shape of a strip having two opposite ends laying adjacent the circumferential wall and two opposite sides each laying at a distance from the circumferential wall.

Providing a filter layer in laying adjacent to the circumferential wall may influence the preferred flow that forms along the circumferential wall during brewing. In addition, it is believed that the a preferred flow may also occur in other portions of the strip shaped filter layer, as the strip shaped filter layer extends across the foil.

Possibly it holds for each embodiment that a centre of the filter layer at least substantially coincides with a centre of that part of the foil which forms a boundary of the inner space. Alternatively, possibly it holds for each embodiment that a centre of the filter layer is offset with a centre of that part of the foil which forms a boundary of the inner space in a direction parallel to the foil. A centre is in this case defined as a centre of gravity of a flat product having the same circumferential shape as the filter or the shape of that part of the foil which forms a boundary of the inner space respectively.

The filter layer may have for example a thickness of T mm wherein T is in the range of 0.05-0.01, excluding 0.01, or 0.01-1 or 1-10 excluding 1, preferably 0.05 - 0.5 , more preferably 0.05-0.2. The thickness of the filter may influence a preferred path through the filter, as well as increase the amount of fines caught by the filter. Additional filter material provides an additional volume of the inner space of the capsule in which a preferred flow may be established and/or through which a preferred flow may flow.

Optionally, the filter layer comprises a stack of sub filter layer wherein each sub filter layer is sheet shaped. Through the stacking of sub filter layers a desired filter thickness may be achieved. The stack may for example comprise 2-10 sub filter layers.

Optionally, the extractable product comprises or consists of H grams of ground coffee wherein H is in the range of 4-11, preferably in the range of 5-8 more preferably in the range of 5.3-6. Due to the filter layer more ground coffee can be provided in the capsule without an increased risk that the foil is blocked by fines during brewing.

Also by providing a filter layer, the applicant found that more possibilities regarding the coffee parameters of the capsule for brewing coffee are available. Different amounts of ground coffee and/or finer coffee may be used, while maintain a brewing process that is reproducible and/or controllable. Additionally, an improved cup of coffee may be obtained having desired dry matter amount, crema layer and an acceptable brewing time for the user.

For each of the embodiments the bottom comprises a plurality of slits forming entrance openings of the capsule.

The invention also relates to a system according to claim 24. The system comprises the above described exchangeable capsule, and an apparatus comprising a receptacle for holding the exchangeable capsule, and a fluid dispensing device for supplying an amount of a fluid, such as water, under pressure to the exchangeable capsule, wherein the fluid dispensing device is arranged for supplying the fluid to the extractable product through the bottom for forming the beverage, wherein the receptacle comprises a support surface, and wherein the capsule is arranged to at least partly abut against the support surface for draining the prepared beverage from the capsule through the lid and through the support surface, wherein the lid comprises a flexible foil having a plurality of exit openings defining an exit area for draining of the prepared beverage, wherein inside the capsule between the extractable product and the lid a substantially sheet shaped filter layer is provided that covers part of the exit openings in the foil, wherein the system comprises an outlet which, in use, is in fluid communication with the lid for draining the prepared beverage from the capsule and supplying the beverage to a container such as a cup. When using the capsule according to the invention in the apparatus of the system, the same effects and advantages are obtained as described with the capsule. The support surface of the apparatus of the system may comprise lid piercing means intended for piercing an exit area of for instance a hermetically sealed, closed capsule, when the exit area of such capsule is sufficiently pressed against the lid piercing means under the influence of the pressure of the fluid and/or beverage in the capsule for creating at least one exit opening through which the beverage can drain from said hermetically sealed capsule. In case the capsule according to the invention is used in such an apparatus, the foil with exit openings and the filter layer provided between said foil and the roast and ground coffee provided inside the capsule body will stay in tact. However, the lid may deform against the lid piercing means. Consequently, the roast and ground particles will remain inside the capsule during brewing and during removing of the capsule from the apparatus after finishing of the beverage.

To be able to retain the fines before reaching the exit openings of the foil, the filter layer may have an air permeability of 0-2000 mm/second measured at a pressure of approximately 200 Pascal. By means of the system the beverage prepared in a cup, for example about 35-50vml, having a cylindrical inner space with a diameter of 6 cm comprises a crema layer with a height R mm wherein R lays within the range of 2-16, preferably within the range of 4-12, and more preferably within the range of 5-8.5.

The invention will now be further elucidated by means of, nonlimiting, examples referring to the drawing, in which
Fig. 1 shows an example of a system with a capsule for preparing a beverage according to a first embodiment of the invention;
Fig. 2 shows a second example of a system with a capsule according to a second embodiment of the invention;
Fig. 3 shows a third embodiment of the capsule according to the invention;
Fig. 4 shows a fourth embodiment of a capsule according to the invention;
Fig. 5 shows an example of the filter layer of a capsule according to the invention;
Fig. 6 shows another example of the filter layer of a capsule according to the invention;
Fig. 7 shows a further example of the filter layer of a capsule according to the invention;
Fig. 8 shows another example of the filter layer of a capsule according to the invention;
Fig. 9 also shows an example of the filter layer of a capsule according to the invention;
Fig. 10 shows an alternative example of the additional filter layer of a capsule according to the invention;
Fig. 11A shows schematic cross section view of a prior art capsule;
Fig. 11B shows a schematic view from inside the capsule of Fig. 11A viewed in a direction B;
Fig. 12A shows a schematic cross section view of a capsule according to the invention;
Fig. 12B shows a schematic view from inside the capsule of Fig. 12A viewed in a direction B;
Fig. 13A shows a schematic cross section view of a capsule according to the invention;
Fig. 13B shows a schematic view from inside the capsule of Fig. 13A viewed in a direction B;
Fig. 14A shows schematic cross section view of a prior art capsule;
Fig. 14B shows a schematic view from inside the capsule of Fig. 14A viewed in a direction B;
Fig. 15A shows a schematic cross section view of a capsule according to the invention;
Fig. 15B shows a schematic view from inside the capsule of Fig. 15A viewed in a direction B;
Fig. 16A shows a schematic cross section view of a capsule according to the invention;
Fig. 16B shows a schematic view from inside the capsule of Fig. 16A viewed in a direction B;
Fig. 17A shows a schematic cross section view of a capsule according to the invention;
Fig. 17B shows a schematic view from inside the capsule of Fig. 17A viewed in a direction B;
Fig. 18A shows a schematic cross section view of a capsule according to the invention; and
Fig. 18B shows a schematic view from inside the capsule of Fig. 18A viewed in a direction B;

It is noted that identical or corresponding elements in the different drawings are indicated with identical or corresponding reference numerals. The exemplary embodiments shown should not be construed to be limitative in any manner and serve merely as illustration.

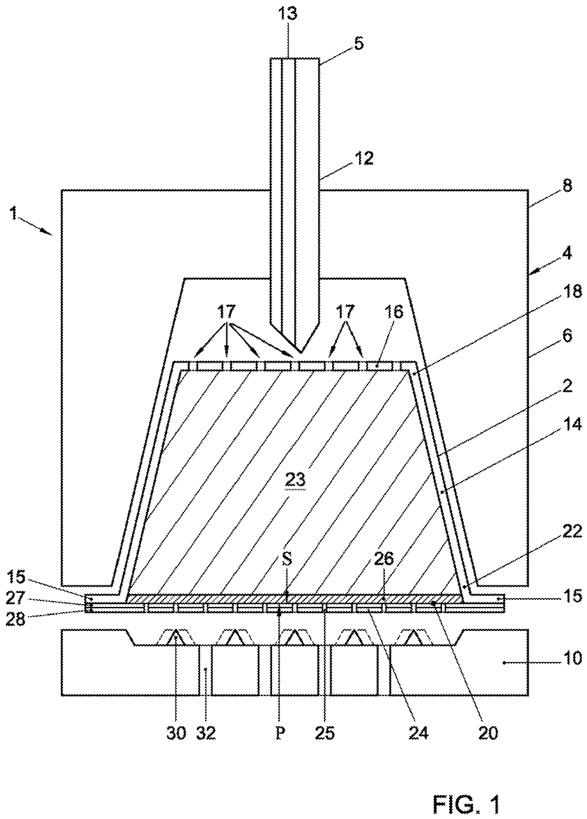

Figure 1 shows an example of a first embodiment of a system 1 for preparing a predetermined quantity of beverage suitable for consumption using an extractable product according to the invention. The system 1 comprises an exchangeable capsule 2 and an apparatus 4. The apparatus 4 comprises a receptacle 6 for holding the exchangeable capsule 2. In Figure 1, a gap is drawn between the capsule 2 and the receptacle 6 for clarity. It will be appreciated that, in use, the capsule 2 may lie in contact with the receptacle 6. In this example the receptacle 6 has a shape at least partly complementary to the shape of the capsule 2. In this example the receptacle 6 comprises an upper part 8 and a support surface 10. The apparatus 4 further comprises lid piercing means 30 that are provided for piercing a lid of a hermetically sealed capsule when the pressure inside the capsule 2 is built up high enough. The apparatus 4 also comprises a fluid dispensing device 5 for supplying an amount of a fluid, such as hot water, under a high pressure to the exchangeable capsule 2. The fluid dispensing device 5 is operatively connected to bottom piercing means 12 that are also intended for piercing a hermetically sealed capsule. In Figure 1, the bottom piercing means 12 are shown in an extended position. Since the capsule 2 according to the invention is an open capsule that need not be pierced, the end of the bottom piercing means 12 is positioned at a short distance from the capsule 2. However, in an alternative embodiment of the invention, the fluid dispensing device 5 may comprise a fluid supply that extends adjacent the bottom piercing means 12 into the receptacle inner space. With such a construction, the fluid is supplied to the inner space of the receptacle 6 above the capsule instead of via the bottom piercing means. In a further embodiment, the capsule 2 may comprise a closed bottom that in use is pierced by the lid piercing means 12 to provide a supply opening in the capsule such that the fluid can enter the capsule and come into contact with the extractable product.

In the system 1 shown in Figure 1, the exchangeable open capsule 2 according to the invention comprises a circumferential wall 14, a bottom 16 closing the circumferential wall 14 at a first end 18, and a lid 20 closing the circumferential wall 14 at a second end 22 opposite the bottom 16. The circumferential wall 14, the bottom 16 and the lid 20 enclose an inner space 23 comprising the beverage ingredient such as roast and ground coffee. The capsule body may be filled with approximately 4-11 grams, preferably 5-8 grams, more preferably 5.3-6 grams of roast and ground coffee. The average particle size may be between 100-1000µm, preferably between 200-750µm, more preferably between 250-500µm. The capsule may be suitable for preparing a single portion of the beverage, preferably a single cup of the beverage, e.g. 20 ml - 30 ml excluding 30 ml or 30-200ml of the prepared beverage. Dependent on the desired strength of the prepared beverage the amount of extractable product may vary. For preparing a cup of coffee, the capsule 2 may have an inner space 24 of approximately 11-18 ml. For instance, the inner space 24 may have a volume of approximately 12 ml. To be suitable for preparation of different kinds of coffee, the capsule 2 may comprise an amount of roast and ground coffee with a density of 0.278 gr/cm³ - 0.5 gr/cm³, preferably a density of 0.313gr/cm³ - -0.455 gr/cm³, more preferably a density of 0.357gr/cm³ - 0.434gr/cm³, most preferably a density of 0.379gr/cm³ - -0.416 gr/cm³. The pouring volume of the roast and ground coffee may be between 500-900cc/250gr, preferably between 550-800cc/250gr, more preferably between 575-700cc/250gr, most preferably between 600-660cc/250gr coffee. According to a further embodiment of the invention, the roast and ground coffee may comprise an average particle size of 100-1000µm, preferably an average particle size of 200-750µm, more preferably an average particle size of 250-500µm. With such an average particle size a coffee with a relatively large amount of dry matter and thus a good quality is obtained.

In the example of Figure 1, the circumferential first wall 14 is substantially rigid. The circumferential first wall 14 may e.g. comprise a plastics material and may be formed by e.g. injection moulding, vacuum-forming, thermoforming or the like. In this example the bottom 16 is integral with the circumferential first wall 14. In this example the second wall 16 is substantially rigid and comprises a plurality of entrance openings 17 for allowing the fluid to enter the capsule 2. The bottom 16 provides an entrance filter of the capsule 2.

The lid 20 of the capsule 2 comprises a multilayer foil 24 with a plurality of exit openings 25, through which the beverage can drain from the capsule 2. The multilayer foil 24 comprises two layers 27, 28. The two layers 27, 28 are bonded together so they can act on each other and/or strengthen each other. A physical and/or a chemical bond may be provided over approximately the entire surface of the layers. In this example, the first layer 27 has a higher tear strength than the second layer 28, and the second layer 28 has a higher stiffness than the first layer 27. The stiffness and the tear strength of the layers 27, 28 is such that the layers bonded together will not tear, rupture or deform too much such that the multilayer foil 24 may have a relatively constant flow resistance for a pressure built up in the capsule 2, which may thus become more reproducible and/or more controllable. The first layer 27 preferably comprises a layer of polyethylene terephthalate (PET-P) and the second layer 28 preferably comprises a layer of co-polymer polypropylene (CPP). The first layer 27 of PET-P has a thickness of approximately 15µm and the second layer 28 of CPP has a thickness of approximately 30µm. The exit area of the multilayer foil 24 preferably comprises 50-250 openings 25, preferably 70-190, more preferably 100-160 openings, wherein an average opening diameter may be between 0.1mm and 0.5 mm. Thus, the fluid can drain from the capsule 2 over a large area. Hence, a very homogeneous drain of beverage from the extractable product is obtained. Thus, the risk of occurrence of preferential paths via which the fluid flows through the extractable product is greatly reduced.

In the example of Figure 1, the capsule 2 further comprises an outwardly extending rim 15 at the second end 22, wherein the lid 20 is attached to the outwardly extending rim 15, e.g. by gluing, welding or the like. Hence, in this example the multilayer foil 24, is attached to the outwardly extending rim 15.

Between the extractable product in the inner space 23 of the capsule 2 and the multilayer foil 24 a substantially sheet shaped filter layer 26 is provided. The filter layer 26 may be layer of paper filtering material or a layer of non-woven material. The filter layer 26 is provided for preventing the exit openings 25 of the multilayer foil 24 to become obstructed by small extractable product particles, so called fines, during preparation of the beverage. Therefore, the filter layer 26 may be of paper filtering material having a weight of approximately 1-250 grams/m2, more preferably between 10-100 grams/m2, preferably approximately 15-50 grams/m2. Alternatively, the filter layer 26 may be of a non-woven or woven material, such as a synthetic material like for instance high density polyethylene (HDPE). In an example of the capsule, the material of the filter layer may be calendered. The filter layer 26 may comprise a fine structured network of fibers and/or meshes. An example of such a material may be Tyvek. In a different embodiment, the filter layer may comprise a screen, for instance a plastic or metal screen. Such a material layer may comprise a similar thickness and weight as above indicated with the paper filtering material. To be able to retain the fines before reaching the exit openings 25 of the multilayer foil 24, the filter layer 26 may have an air permeability of maximal 0-550 or 550-2000 excluding 550 mm/second measured at a pressure of approximately 200 Pascal. As is visible in Figure 1, the filter layer 26 extends substantially parallel to the multilayer foil 24, wherein the filter layer covers part of the exit openings provided in the multilayer foil 24.

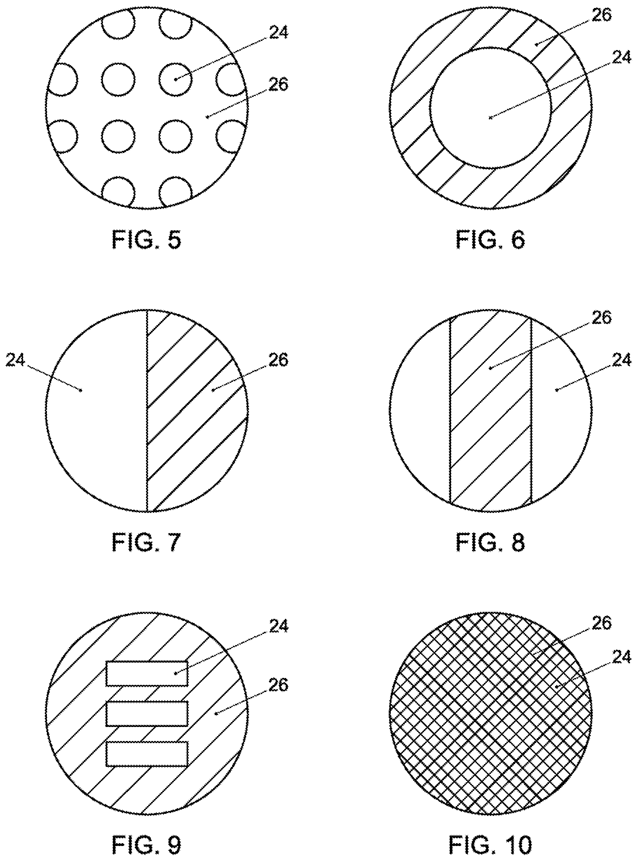

In an alternative embodiment, the filter layer may be configured to cover a part of the total amount of exit openings. In that case, the filter layer may for instance comprise an opening provided in the central area of the filter layer (see for instance Figure 6). In the shown embodiment of the capsule 2 according to the invention, the filter layer 26 extends across the maximal transversal cross section of the second open end 22 of the capsule 2. A first surface P of the filter layer 26 may abut against the multilayer foil 24, at least to a surface S opposing the filter layer 26 and may be pressed between the roast and ground coffee and the multilayer foil 24 to keep the filter layer 26 in place. In this case, the filter layer 26 in not connected to other parts of the capsule 2. Alternatively, the filter layer 26 may be connected to the multilayer foil 24 along the entire surface S thereof. The filter layer 26 may for instance be sealed to the multilayer foil 24 or glued. To prevent the exit openings 25 from being filled with adhesive, the adhesive may be applied in a pattern, for instance a swirl pattern. To enhance the sealing properties between said filter layer 26 and the multilayer foil 24, the filter layer 26 may be provided with polyethylene (PE). Instead of connecting the filter layer 26 along its entire surface to the multilayer foil 24, only the circumferential edge of the filter layer 26 may be connected to the multilayer foil 24.

The combination of the multilayer foil 24 and the filter layer 26 prevents extractable product from leaving the capsule 2 for instance during or after preparing of the beverage or during removing of the used capsule 2 from the apparatus 4, thereby preventing soiling of the apparatus 4 and at the same time preventing fines entering the container together with the prepared beverage.

The multilayer foil 24 is arranged to having sufficiently high tear strength not to be pierced by the lid piercing means 30 under the influence of the pressure inside the capsule 2. The filter layer 20 may be configured to contribute to the strength of the lid 9.

Alternatively, or additionally, the multilayer foil 24 forms a sufficiently low flow resistance for the beverage exiting the capsule 2, such that the lid 20 is not pressed against the lid piercing means 30 with sufficient force to be pierced by the lid piercing means 30 and the lid 20 stays intact. More in general it applies that the multiple layer foil 24 and the lid piercing means 30 are adapted to each other such that the capsule 2, in use, is not pierced by the lid piercing means 30 and the lid 20 stays intact. Since the multilayer foil 24 stays intact, also the filter layer 26 will stay intact. It will be appreciated that the lid 20 however may deform against the lid piercing means 30.

The system 1 shown in Figure 1 is operated as follows for preparing a cup of coffee.

The capsule 2 is placed in the receptacle 6. The lid 20 is brought into abutment with the support surface 10. The fluid, here hot water under pressure, is supplied from the fluid dispensing device 5, via the bore 13 in the bottom piercing means 12, to the extractable product in the inner space 23 through the entrance openings 17 provided in the bottom 16 of the capsule 2. In a different embodiment (not shown) the water may be supplied via a water supply that is arranged separately from the bottom piercing means 12. The hot water may be supplied to the roast and ground coffee under a pressure of approximately 4-20 bars, preferably 9-15 bars. The water will wet the coffee grounds and extract the desired substances to form the coffee beverage. The prepared coffee will drain from the capsule 2 through the lid 20 comprising the multilayer foil 24 and the filter layer 26. The coffee beverage is further drained from the receptacle 6 via a plurality of outlets 32, and may be supplied to a container (not shown) such as a cup. During the supply of the water to the roast and ground coffee in the inner space 23 of the capsule 2, coffee particles are redistributed in the inner space 24 of the capsule 2. The relatively small particles, i.e. the fines, are displaced together with the water towards the lid 20 and will be caught by the filter layer 26 and spread in said layer 26 around the exit openings 25 in the multilayer foil 24 provided downstream of the filter layer 26. Consequently, accumulation at the exit openings 25 and/or covering the exit openings 25 by said fines is prevented resulting in more dry material in the prepared beverage, less oil in the prepared beverage and a shorter brewing time than without using the filter layer 26.

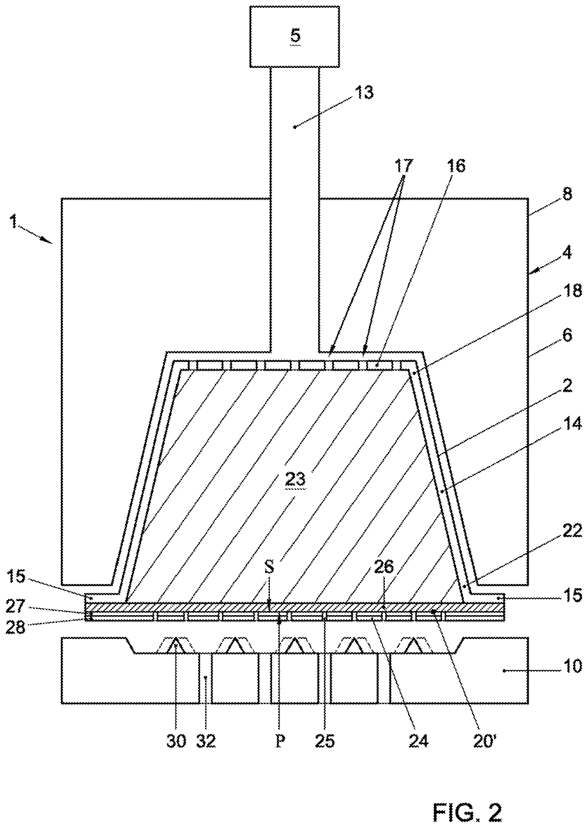

In Figure 2 another example of a system 1 comprising a capsule 2 according to a second embodiment of the invention is shown. For the sake of clarity only the differences with respect to the system 1 according to the first example will be discussed. The apparatus 4 of the system 1 according to Figure 2 does not comprise bottom piercing means 12. In use, fluid is supplied from the fluid dispensing device 5 via a supply opening 13 to the entrance openings 17 provided in the bottom 16 of the capsule 2. In the example of Figure 2 the plurality of entrance openings 17 is distributed over substantially the entire bottom 16. Thus, the fluid is supplied to the extractable product via the plurality of entrance openings 17, which causes the extractable product to be wetted over substantially the entire cross section of the capsule 2. Hence, a very homogeneous supply of fluid to the extractable product is obtained.

The capsule 2 according to the second embodiment of the invention only differs with respect to the capsule 2 of the first embodiment in that the lid 20' has a different construction. The filter layer 26 has substantially the same diameter as the multilayer foil 24 of the lid. The filter layer 26 is connected, with the circumferential edge thereof, to the rim 15, at least to the surface of the rim 15 facing the lid 20'. To be able to seal the filter layer 26 directly to the rim 15, the filter layer 26 may comprise plastic, such as PE content. Alternatively, the filter layer 26 may be coated. The multilayer foil 24 may be sealed against the filter layer 26, either along the entire surface or only along the circumferential edge. If the filter material of the filter layer 26 is thin enough, melting the multilayer foil 24 and the rim 15 together, will suffice to enable keeping the filter layer 26 in place. In that case the filter material of the filter layer 26 does not have to comprise the additional sealing properties such as plastic or a coating.

It will be appreciated that in other not shown embodiments of the system, the apparatus may be different than the apparatus as described in the first or second example of the system according to the invention. For instance, the apparatus can be provided with a hollow space between the lid 20 of the capsule 2 and the outlet openings 28 of the apparatus 4. Also the lid piercing means 30 may be omitted. Thus it is noted that the capsule according to the invention can be used in any suitable apparatus for preparing a beverage by using high pressure.

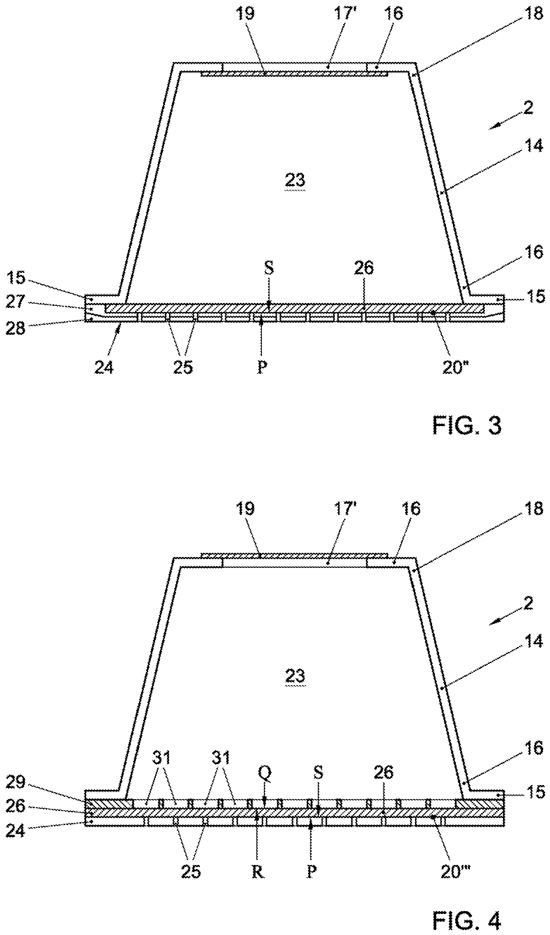

In Figures 3 and 4 further embodiments of the capsule 2 according to the invention are shown. Both capsules 2 may be used in an apparatus 4 as shown in Figure 1 or an apparatus 4 as shown in Figure 2 or any other suitable apparatus.

The capsules 2 in Figures 3 and 4 differ from the capsules 2 in Figures 1 and 2 in that the bottom 16 and the lid 20", 20'" are configured differently. For the sake of clarity only the differences will be discussed here in detail. The description of the features that have been described before with reference to Figures 1 and/or 2 is omitted here.

The lid 20" of the capsule 2 as shown in Figure 3 comprises a multilayer foil 24 with the first material layer 27 and the second material layer 28. The filter layer 26 comprises a filtering paper that is positioned between the roast and ground coffee provided in the inner space 23 of the capsule 2 and the multilayer foil 24. The circumferential edge of the filter layer 26 is enclosed between the lid 20" and the outwardly extending rim 15. The filter layer 26 may remain in the desired position by means of the seal that connects the lid 20" to the rim 15 at an outer part of the rim 15. The entrance filter 19 comprises a porous sheet, for instance of filter paper, that is connected to the bottom 16 to extend along the bottom opening 17'. The entrance filter is connected to the circumferential edge of the bottom 16 of the capsule 2.

In the capsule 2 shown in Figure 4, the entrance filter 19 also comprises a porous sheet, for instance of filter paper or non-woven material. However, in the capsule 2 of Figure 4, the entrance filter 19 is connected to an outer circumferential edge of the bottom 16 of the capsule 2. By doing so, the entire inner space 23 of the capsule 2 can be filled with roast and ground coffee, which may be advantageous depending on the desired strength and/or quality of the prepared beverage. The lid 20'" of the capsule 2 of Figure 4 comprises a multilayer foil 24 and a filter layer 26, for instance as described with the second embodiment of the capsule 2 in Figure 2. However, the lid 20"'comprises a further layer, for instance comprising PE fibres or comprising a foil 29 having a plurality of openings 31. The openings 31 have a larger diameter than the exit openings 25 of the multilayer foil 24. The relatively large openings 31 enable the spreading of the fines in the filter layer 26 to prevent said particles from reaching the exit openings 25 of the multilayer foil 24. The construction of the lid 20'" enables prefabrication of the lid material and easy connection of the entire lid 20'" to the rim 15. In the described embodiments of the capsule that are shown in Figures 1-4, the foil is a multilayer foil. However, in different embodiments of the capsule the foil may be a different foil, for instance a single layer foil, comprising the exit openings.

Figures 5-10 show further examples of filter layers 26 that may be provided on top of the respective flexible foil layer, such as the multilayer foil 24. Such a filter layer 26 may be comprised in a capsule 2 according to the invention. In Figure 5 a paper or non-woven filter layer is shown that comprises multiple substantially circular holes. The material that extends in between the respective holes covers some of the exit openings 25 in the foil 24 of the capsule 2. An advantage of using a filter layer 26 with such configuration is that during manufacturing of a capsule according to the invention, the filter layer 24 does not have to be positioned relative to the flexible foil 24 of the capsule 2.

In Figure 6, the filter layer 26 may comprise a single opening that preferably is located above a centre area of the foil 24. In Figure 7, the filter layer 26 covers approximately half of the flexible foil 24. This also holds for the example of the foil layer 26 as shown in Figure 8. The filter layer 26 may be formed out of an elongate strip of filter layer material. Figure 9 shows a filter layer 26 having openings with a substantially rectangular shape. In other examples, the openings may have other shapes such as triangular openings. The filter layers 26 as shown in Figures 5-9 may for instance be of paper or non woven material. In Figure 10, the filter layer 26 is of a gauze having a multitude of small openings.

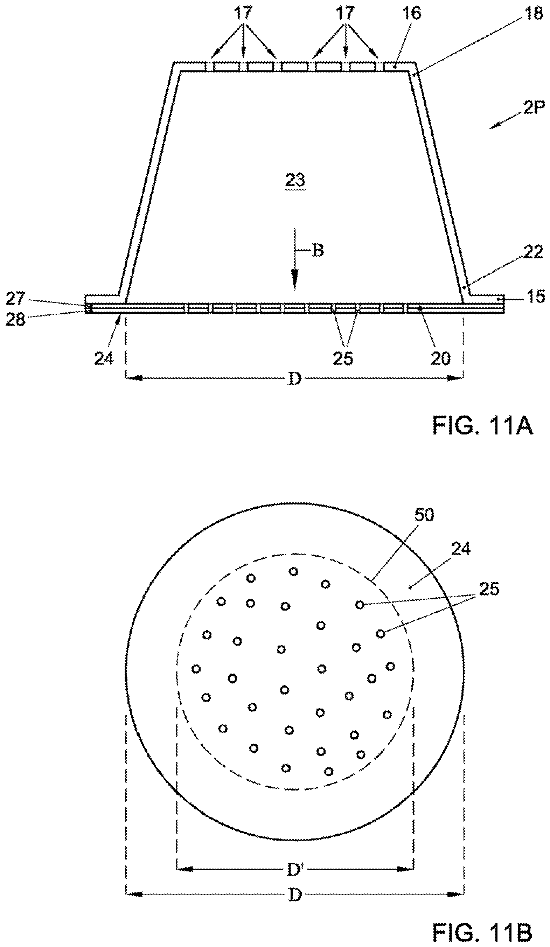

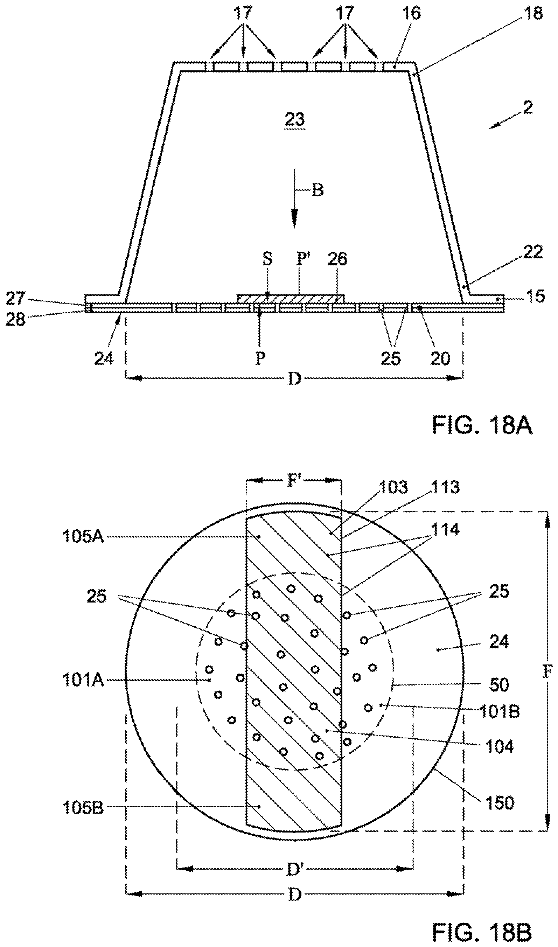

In Figures 11A/B-18A/B, different embodiments of the capsules 2, including filter layer, according to the invention are described in reference to two prior art capsules 2P without a filter layer. The brewing properties of the beverage resulting from brewing the capsules 2, 2P in an apparatus 4, as described with regard to Figure 1, are discussed in order to further exemplify the advantages of a capsule according to the invention.

The capsules 2,2P were brewed using an apparatus similar to the apparatus 4 described in reference to Figure 1, resulting in a coffee beverage. Hot water was supplied to the capsule from the fluid dispensing device 5 to the extractable product in the inner space 23 through the entrance openings 17, possibly slits, provided in the bottom 16 of the capsule 22P. The hot water was supplied at an average temperature of 92-98 degrees Celsius and to the capsules under an average pressure of 14-16 bar. The prepared coffee was drained from the capsule 2,2P through the lid 20. The coffee beverage was further drained from the receptacle 6 via a plurality of outlets 32, into for example a container such as a cup. During the supply of the water to the roast and ground coffee in the inner space 23 of the capsule 2,2P, coffee particles were redistributed in the inner space 23 of the capsule 2,2P. The relatively small particles, i.e. the fines, were displaced together with the water towards the lid 20.

The brewing properties of the beverage brewed by each capsule were measured. Brewing time was measured in seconds. The crema layer of the beverage was measured in millimetres, and the amount of dry matter (DMA) was measured in g/100 g and is expressed in percent.

In Figures 11A-18A, a capsule 2P,2 is shown. In the Figures 11B-18B, the surface area of that part of the foil 24 which forms a boundary of the inner space 23 of the respective capsule is shown viewed in a direction B indicated in Figures 11A-18A, respectively. The second open end 22 of the capsule 2,2P has a diameter D, in this example equal to 29mm. The surface area of the foil seen in a direction B and defined by the second open end 22 of the capsule has a diameter D which corresponds to the diameter of the inner space 23 of the capsule 2 at the second open end 22 of the capsule 2,2P measured along the foil 24. In all the capsules 2,2P shown in Figures 11A/B-18A/B an exit opening has an average diameter of 300 µm before brewing. Furthermore, if present a filter layer was formed from filter paper have a density of 22 g/m2, and air permeability of 517 mm/s at 200Pa and a thickness of 0.1 mm.

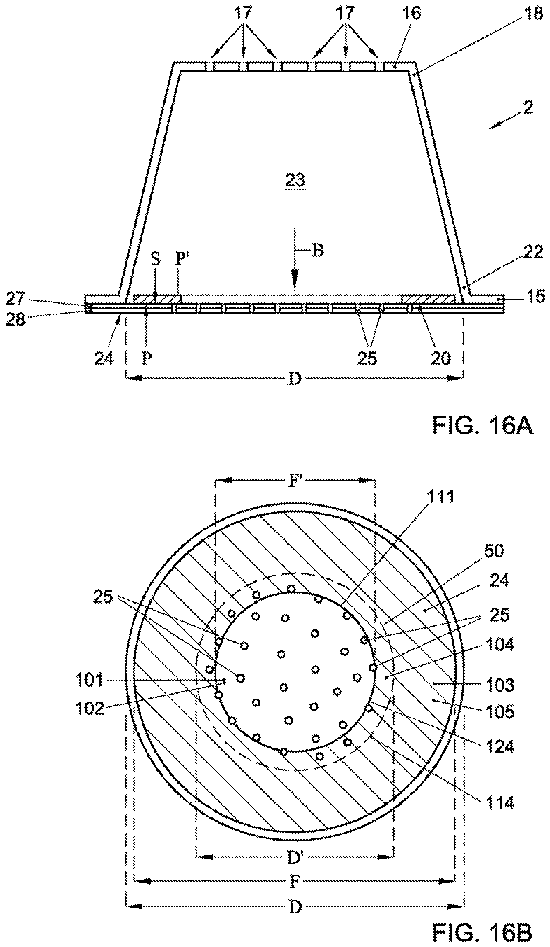

In Figures 11A/B - 16A/B, the capsule 2,2P has an inner space with a volume of 12 ml. The inner space 23 of the capsule 2,2P is filled with 5.8 gm of ground roasted Ristreto coffee. The coffee has a pouring volume of 684 ml/250g and a particle density X50 of 400 µm. The percentage of fines, i.e. particles smaller than 100 µm is 13,8%.

In Figure 11A, a prior art capsule 2P is shown. The open prior art capsule 2P is not provided with a filter layer between the extractable product in the inner space 23 and the lid 20, which comprises a multilayer foil 24 with a plurality of exit openings 25. The multilayer foil 24 has 141 exit openings 25 distributed in a pattern within an area defined by a circle 50 having a diameter of D'. The circle 50 is concentric with the surface area of the foil 24 defined by the second open end 22.

The inner space 23 of the prior art capsule 2P was filled with the 5,8g of the extractable product described above, and brewed. Brewing capsule 2P with the respective coffee product resulted in the blocking of the brewing apparatus 4. With all of the exit openings exposed there is no movement of the fines around the exit openings. Furthermore, the compression of the coffee bed restricts the flow of water at the exit openings 25 of the foil 24, resulting in the blocking of the apparatus 4.

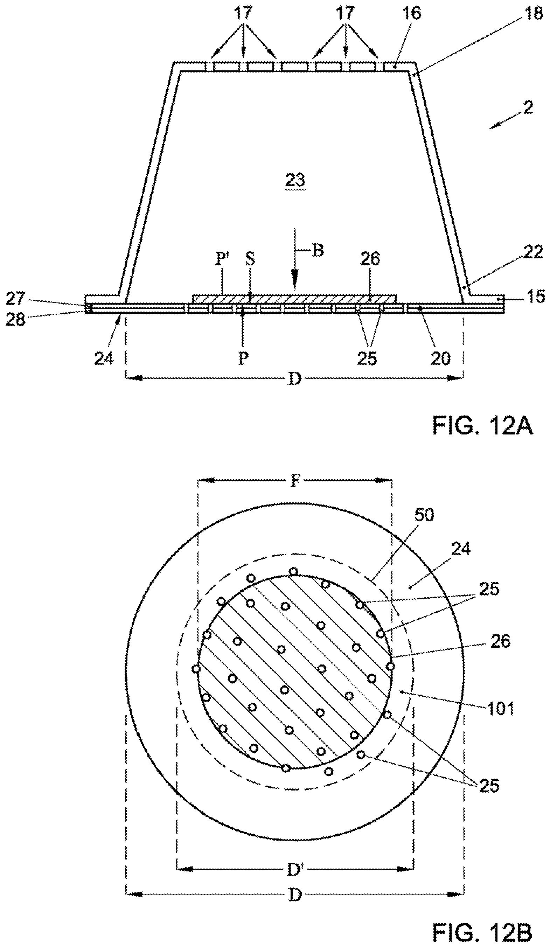

Figure 12A shows a capsule 2 according to the invention. In order to reduce the compression and/or pressure drop of the coffee, during brewing, in the area adjacent to the foil 24, a filter layer 26 may be provided as shown in Figure 12A. The filter layer 26 is positioned between the extractable product in the inner space 23 and the lid 20, which comprises a multilayer foil 24 with a plurality of exit openings 25. In this example, the multilayer foil 24 has 141 exit openings 25 distributed in a pattern within an area defined by a circle 50 having a diameter of D', 22.5 mm. The circle 50 is concentric with the surface area of the foil 24 defined by the second open end 22.

The filter layer 26, in this example, is disc-shaped and has a diameter F. In this example, the diameter F is equal to 22 mm, which is approximately 3% smaller than D' the diameter of the circle in which the plurality of exit openings 25 are confined. As shown in Figure 12B, a plurality of exit openings is covered by the filter layer 26, and a plurality of exit openings 25 is not covered by the filter layer 26. It will be appreciated that covered also includes partially covered. The plurality of exit openings 25 not covered by the filter layer 26 directly faces the extractable product contained in the inner space 23. The first surface P of the filter layer 26 abuts against the multilayer foil 24, at least to the surface S opposing the filter layer 26 and may be pressed between the roast and ground coffee and the multilayer foil 24 to keep the filter layer 26 in place. A second surface P' of the filter layer 26, which is opposite the first surface P of the filter layer 26, directly faces the extractable product contained in the inner space 23.

If the exit openings are evenly distributed relative to each other the following can be calculated. In this example, the plurality of the exit openings 25 which are not covered by the filter layer 26 forms approximately 5% of the exit openings 25. The plurality of exit openings 25 which are coved by the filter layer 26 forms 95% of the total number of exit openings. Furthermore, the surface area of the foil 24 which is not covered by the filter layer 26 comprises 42% of the total surface area of the foil which forms the boundary of the inner space of the capsule. The surface area of the foil which is covered by the filter layer 26 comprises 58% of the total surface area of the foil which forms the boundary of the inner space of the capsule.

The plurality of exit openings which are not covered by the filter layer are distributed over R*42% of the total surface area of the foil which forms a boundary of the inner space of the capsule and the plurality of exit openings which are covered by the filter layer are distributed over Q*58% of the total surface area of the foil which forms a boundary of the inner space of the capsule. In this example, R is approximately 0.06, and Q is equal to 1.

In this example, a first type 101 of portion of the surface area of the foil 24 wherein a plurality of the plurality of exit openings 25 is distributed which are not covered by the filter layer 26 lays at least substantially completely at a distance from the circumferential wall. In this example, the shortest distance from the circumferential wall 14 to the first type of portion 101 measured along the foil 24 is D/2-D'/2, 3.25 mm.

An extractable product having the same properties which caused the capsule 2P of Fig. 11A to block may now be brewed. The filter layer 26 between the extractable product, i.e. roast and ground coffee, and the foil 24 with exit openings 25 of the lid 20, catches the fines of the coffee. The fines will spread in the filter layer 26 before reaching the exit openings 25 in the foil 24. In this way, at least not all fines will reach the exit openings 25, while a flow restriction is still formed. Additionally, the presence of a filter layer 26 may allow a preferred flow to form through the filter layer 26, because the flow resistance through the filter layer is smaller than the flow resistance through the compacted extractable product.

Due to the filter layer 26 a beverage could be brewed in the apparatus 4. Brewing times for an espresso beverage were in the range of 23-29 seconds. The crema layer was in the range of 2.5 mm - 6 mm. DMA was between 3.38% and 3.5%.

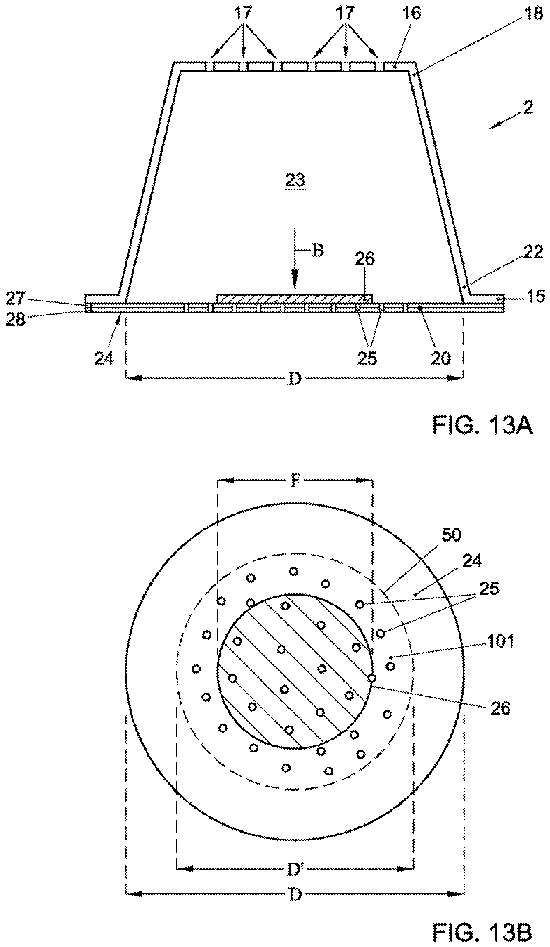

Figure 13A shows a capsule 2 according to the invention. A filter layer 26 in the shape of a disc is provided between the extractable product in the inner space 23 and the lid 20, which comprises a multilayer foil 24 with a plurality of exit openings 25. In this example, the multilayer foil 24 has 141 exit openings 25 distributed in a pattern within an area defined by a circle 50 having a diameter of D', 22.5 mm. The circle 50 is concentric with the surface area of the foil 24 defined by the second open end 22.

The filter layer 26, in this example, is disc-shaped and has a diameter F equal to 18 mm. As shown in Fig. 13B, a plurality of exit openings 25 is covered by the filter layer 26, and a plurality of exit openings 25 is not covered by the filter layer 26. The plurality of exit openings 25 not covered by the filter layer 26 directly faces the extractable product contained in the inner space 23.

If the exit openings are evenly distributed relative to each other the following can be calculated. In this example, the plurality of the exit openings 25 which are not covered by the filter layer 26 forms 36% of the exit openings 25. The plurality of exit openings 25 which are coved by the filter layer 26 forms 64% of the total number of exit openings. Furthermore, the surface area of the foil 24 which is not covered by the filter layer comprises 61% of the total surface area of the foil which forms the boundary of the inner space of the capsule. The surface area of the foil which is covered by the filter layer 26 comprises 39% of the total surface area of the foil which forms the boundary of the inner space of the capsule.

The plurality of exit openings which are not covered by the filter layer are distributed over R*61% of the total surface area of the foil which forms a boundary of the inner space of the capsule and the plurality of exit openings which are covered by the filter layer are distributed over Q*39% of the total surface area of the foil which forms a boundary of the inner space of the capsule. In this example, R is approximately 0.35, and Q is equal to 1.

In this example, a first type 101 of portion of the surface area of the foil 24 wherein a plurality of the plurality of exit openings 25 is distributed which are not covered by the filter layer 26 lays at least substantially completely at a distance from the circumferential wall. In this example, the shortest distance from the circumferential wall 14 to the first type of portion 101 measured along the foil is D/2-D'/2, which is equal to 3.25 mm.

An extractable product having the same properties which caused the capsule 2P of Fig. 11A to block may now be brewed. The filter layer 26 between the extractable product, i.e. roast and ground coffee, and the foil 24 with exit openings 25 of the lid 20, catches the fines of the coffee. The fines will spread in the filter layer 26 before reaching the exit openings 25 in the foil 24. In this way, at least not all fines will reach the exit openings 25. However, due to the higher percentage of uncovered exit openings, in comparison to Fig. 12A, a greater flow restriction is formed Additionally, the presence of a filter layer 26 may allow a preferred flow to form through the filter layer 26, because the flow resistance through the filter layer is smaller than the flow resistance through the compacted extractable product.

Due to the filter layer 26 a beverage could be brewed in the apparatus 4. Brewing times for an espresso beverage were in the range of 28-48 seconds. The crema layer was in the range of 5 mm - 8 mm. DMA was between 3.45% and 3.59%. Although brewing time has increased in comparison to the 22 mm disc-shaped filter, the brewing properties remained controllable reliable.

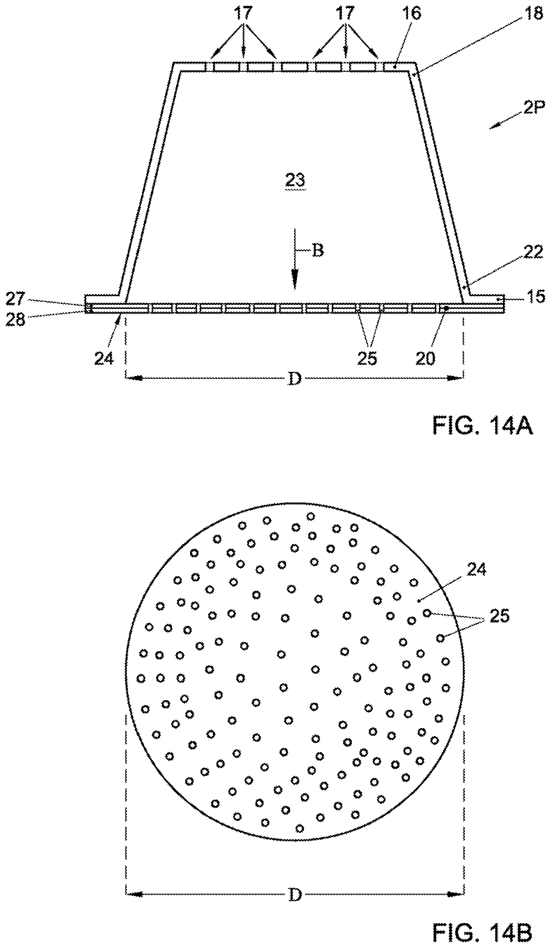

In Figure 14A, a prior art capsule 2P is shown. The open prior art capsule 2P is not provided with a filter layer between the extractable product in the inner space 23 and the lid 20, which comprises a multilayer foil 24 with a plurality of exit openings 25. The multilayer foil 24 has 145 exit openings 25 distributed over the foil within an area formed by the boundary of the inner space of the capsule 2.

The inner space 23 of the prior art capsule 2P was filled with the 5,8g of the extractable product described above, and brewed. Brewing capsule 2P with the respective coffee product resulted in the blocking of the brewing apparatus 4. With all of the exit openings exposed there is no movement of the fines around the exit openings. Furthermore, the compression of the coffee bed restricts the flow of water at the exit openings 25 of the foil 24, resulting in lengthy brewing times as well as the blocking of the apparatus 4.

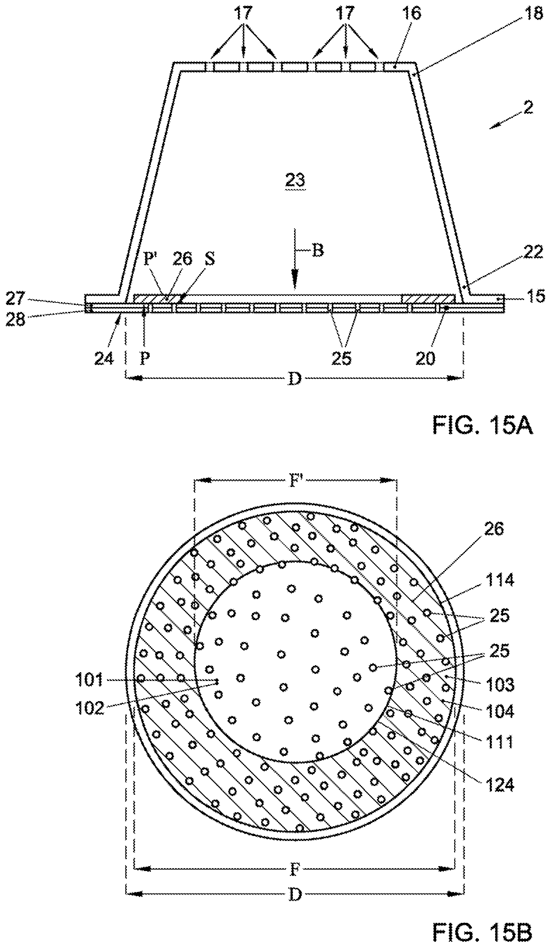

Figure 15A shows a capsule 2 according to the invention. In order to reduce the compression and/or pressure drop of the coffee, during brewing, in the area adjacent to the foil 24, a filter layer 26 may be provided as shown in Figure 15A. The filter layer 26 is positioned between the extractable product in the inner space 23 and the lid 20, which comprises a multilayer foil 24 with a plurality of exit openings 25. In this example, the multilayer foil 24 has 145 exit openings 25 distributed over the foil within an area formed by the boundary of the inner space of the capsule 2.

The filter layer 26, in this example, is ring-shaped and has a outer diameter F, equal to 28.5 mm, and an inner diameter of F', equal to 22 mm. As the outer diameter is slightly smaller than the inner diameter D of the capsule 2 at the second open end 22, the filter 26 may placed in the capsule 2 between the extractable product in the inner space 23 and foil 24. It is not necessary to secure the filter 26 to the foil 24. In this case the outer diameter of the filter F, is approximately 2% smaller than the inner diameter D of the capsule 2 at the second open end 22.

As shown in Fig. 15B, a plurality of exit openings is covered by the filter layer 26, and a plurality of exit openings 25 is not covered by the filter layer 26. The plurality of exit openings 25 not covered by the filter layer 26 directly faces the extractable product contained in the inner space 23. The first surface P of the filter layer 26 abuts against the multilayer foil 24, at least to the surface S opposing the filter layer 26 and may be pressed between the roast and ground coffee and the multilayer foil 24 to keep the filter layer 26 in place. A second surface P' of the filter layer 26, which is opposite the first surface P of the filter layer 26, directly faces the extractable product contained in the inner space 23.

If the exit openings are evenly distributed relative to each other the following can be calculated. In this example, the plurality of the exit openings 25 which are not covered by the filter layer 26 forms 61% of the exit openings 25. The plurality of exit openings 25 which are covered by the filter layer 26 forms 39% of the total number of exit openings. The surface are of the foil which is not covered by the filter layer 26 comprises 61% of the total surface area of the foil which forms the boundary of the inner space of the capsule, and the surface area of the foil which is covered by the filter layer 26 comprises is 39% of the total surface area of the foil which forms the boundary of the inner space of the capsule.

The plurality of exit openings which are not covered by the filter layer are distributed over R*61% of the total surface area of the foil which forms a boundary of the inner space of the capsule and the plurality of exit openings which are covered by the filter layer are distributed over Q*39% of the total surface area of the foil which forms a boundary of the inner space of the capsule. In this example, R is approximately 0.95, and Q is equal to 1.

In this example, a first type of portion 101 of the surface area of the foil wherein a plurality of exit openings 25 are distributed which are not covered by the filter layer 26 lays at least substantially completely at a distance from the circumferential wall. Due to the ring shape of the filter 26, 100% of the length of an outer boundary 111 of a first type 101 of portion of the surface area of the foil 24 wherein a plurality of exit openings 25 are distributed which are not covered by the filter layer 26 lays at a distance from the circumferential wall 14. In this example, the shortest distance from the circumferential wall 14 to the first type of portion 101 measured along the foil 24 is approximately D/2 - F'/2, 3.5 mm. This distance is 12% from the diameter D of the inner space 23 adjacent the foil 24. The outer boundary 111 of the first type 101 of portion of the surface area of the foil 24 is the only boundary of the first type of portion of the surface area the foil.

Similarly, a second type of portion 102 of the surface area of the foil which is not covered by the filter layer lays at least substantially completely at a distance from the circumferential wall. In this example, the shortest distance from the circumferential wall 14 to the second type of portion 102 measured along the foil is approximately D/2 - F'/2, 3.5 mm. Furthermore, the first type of portion 101 of the surface area and the second type of portion 102 of the surface coincide.

The second type of portion 102 of the foil has a diameter which is approximately 75% of the diameter of the inner space adjacent the foil. Additionally, the centre area of the ring-shaped filter 26 coincides with the first type 101 of part of the surface area of the foil and the centre area of the ring-shaped filter 26 coincides with the second type 102 of part of the surface of the foil.

A third type of portion 103 of the surface area of the foil which is covered by the filter layer lays at least substantially completely adjacent the circumferential wall. Substantially completely adjacent implies that a distance measured along the foil 24 from the outer edge of the filter 26 to the circumferential wall 14 is smaller than 3% of D.

In this example, because of the ring shape of the filter layer 26, and the distribution of the exit opening 25 over the total surface area of the foil 24 bounded by the inner space 23, 100% of the length of an outer boundary 114 of a fourth type 104 of portion of the surface area of the foil 24 wherein the plurality of exit openings 25 are distributed which are covered by the filter layer 26 lays adjacent to the circumferential wall 14. The fourth type 104 of portion of the surface also comprises an inner boundary 124. In this example, the third type 103 of portion of surface area and a fourth type 104 of portion of the surface area of the foil 24 wherein a plurality of exit openings 25 are distributed are the same. Furthermore, the outer boundary 111 of the first type 101 of portion of the surface area of the foil 24 coincides with the inner boundary 124 of the fourth type 104 of portion of the surface of the foil 24.

An extractable product having the same properties which caused the capsule 2P of Fig. 14A to block may now be brewed. The filter layer 26 between the extractable product, i.e. roast and ground coffee, and the foil 24 with exit openings 25 of the lid 20, catches the fines of the coffee. The fines will spread in the filter layer 26 before reaching the exit openings 25 in the foil 24. In this way, at least not all fines will reach the exit openings 25, while a flow restriction is still formed. Additionally, the presence of a filter layer 26 may allow a preferred flow to form through the filter layer 26, because the flow resistance through the filter layer is smaller than the flow resistance through the compacted extractable product. It is believed that a preferred flow along the circumferential sidewall 14 may continue its path into the filter layer 26 and may leave the capsule via the exit openings 25 laying in the fourth type 104 of portion of the surface area of the foil 24. Possibly other exit openings which are not covered by the filter layer 26, located in first type 101 of portion of the surface are of the foil 24 may be partly blocked so that on average a good brewing time, crema layer and DMA can be obtained.

For this capsule 2 depicted in Figure 15A/B, brewing times for an espresso beverage were in the range of 16-24 seconds. The crema layer was in the range of 4 mm - 7.5 mm. DMA was between 3.16% and 3.47%.

Figure 16A shows a capsule 2 according to the invention. In order to reduce the compression and/or pressure drop of the coffee, during brewing, in the area adjacent to the foil 24, a filter layer 26 is provided as shown in Figure 16A. The filter layer 26 is positioned between the extractable product in the inner space 23 and the lid 20, which comprises a multilayer foil 24 with a plurality of exit openings 25. In this example, the multilayer foil 24 has 141 exit openings 25 distributed in a pattern within an area defined by a circle 50 having a diameter of D', 22.5 mm. The circle 50 is concentric with the surface area of the foil 24 defined by the second open end 22.

The filter layer 26, in this example, is ring-shaped and has a outer diameter F, equal to 28.5 mm, and an inner diameter of F', equal to 22 mm. As the outer diameter is slightly smaller than the inner diameter D of the capsule 2 at the second open end 22, the filter 26 may be placed in the capsule 2 between the extractable product in the inner space 23 and foil 24. The filter 26 need not be secured to the foil 24. In this case the outer diameter of the filter F, is approximately 2% smaller than the inner diameter D of the capsule 2 at the second open end 22.

As shown in Fig. 16B, a plurality of exit openings is covered by the filter layer 26, and a plurality of exit openings 25 is not covered by the filter layer 26. The plurality of exit openings 25 not covered by the filter layer 26 directly faces the extractable product contained in the inner space 23. The first surface P of the filter layer 26 abuts against the multilayer foil 24, at least to the surface S opposing the filter layer 26 and may be pressed between the roast and ground coffee and the multilayer foil 24 to keep the filter layer 26 in place. A second surface P' of the filter layer 26, which is opposite the first surface P of the filter layer 26, directly faces the extractable product contained in the inner space 23.

If the exit openings are evenly distributed relative to each other the following can be calculated. In this example, the plurality of the exit openings 25 which are not covered by the filter layer 26 forms 95% of the exit openings 25. The plurality of exit openings 25 which are coved by the filter layer 26 forms 5% of the total number of exit openings. The surface area of the foil 24 which is not covered by the filter layer comprises 61% of the total surface area of the foil which forms the boundary of the inner space 23 of the capsule 2. The surface area of the foil 24 which is covered by the filter layer comprises 39% of the total surface area of the foil which forms the boundary of the inner space 23 of the capsule 2.

The plurality of exit openings which are not covered by the filter layer are distributed over R*61% of the total surface area of the foil which forms a boundary of the inner space of the capsule and the plurality of exit openings which are covered by the filter layer are distributed over Q*39% of the total surface area of the foil which forms a boundary of the inner space of the capsule. In this example, R is approximately 0.95, and Q is approximately to 0.06.

In this example, a first type of portion 101 of the surface area of the foil wherein a plurality of exit openings 25 are distributed which are not covered by the filter layer 26 lays at least substantially completely at a distance from the circumferential wall. Due to the ring shape of the filter 26, 100% of the length of an outer boundary 111 of a first type 101 of portion of the surface area of the foil 24 wherein a plurality of exit openings 25 are distributed which are not covered by the filter layer 26 lays at a distance from the circumferential wall 14. In this example, the shortest distance from the circumferential wall 14 to the first type of portion 101 measured along the foil 24 is approximately D/2 - F'/2, 3.5 mm. This distance is 12% from the diameter D of the inner space 23 adjacent the foil 24. The outer boundary 111 of the first type 101 of portion of the surface area of the foil 24 is the only boundary of the first type of portion of the surface area the foil.

Similarly, a second type of portion 102 of the surface area of the foil which is not covered by the filter layer lays at least substantially completely at a distance from the circumferential wall. In this example, the shortest distance from the circumferential wall 14 to the second type of portion 102 measured along the foil 24 is approximately D/2 - F/2, 3.5 mm. Furthermore, the first type of portion 101 of the surface area and the second type of portion 102 of the surface coincide.

The second type of portion 102 of the foil has a diameter which is approximately 75% of the diameter of the inner space adjacent the foil. Additionally, the centre area of the ring-shaped filter 26 coincides with the first type 101 of part of the surface area of the foil and the centre area of the ring-shaped filter 26 coincides with the second type 102 of part of the surface of the foil.

A third type of portion 103 of the surface area of the foil which is covered by the filter layer lays at least substantially completely adjacent the circumferential wall. Substantially completely adjacent implies that a distance measured along the foil 24 from the outer edge of the filter 26 to the circumferential wall 14 is smaller than 3% of D.

In this example, because of the ring shape of the filter layer 26 and the exit openings being contained in a centred circle of 22.5 mm, 100% of the length of an outer boundary 114 of a fourth type 104 of portion of the surface area of the foil 24 wherein the plurality of exit openings 25 are distributed which are covered by the filter layer 26 lays at a distance to the circumferential wall 14. The shortest distance from the circumferential wall 14 to fourth type 104 of portion measured along the foil 24 is 3.5 mm, or D/2-F'/2. Thus the outer boundary 114 of the fourth type 104 portion is completely at a distance from the circumferential side wall 14. The fourth type 104 of portion of the surface also comprises an inner boundary 124.

In this example, the third type 103 of portion of surface area and a fourth type 104 of portion of the surface area the surface area of the foil 24 wherein the plurality of exit openings 25 are distributed and which is covered by the filter layer 26 are not the same. A circumferential area of the foil which is adjacent the circumferential wall forms a fifth type 105 of portion of the surface area of the foil which is not provided with the exit openings 25 and which is covered by the filter layer 26. The fifth type 105 of portion of the surface area of the foil 24 forms the difference between the third type 103 of portion of the surface area and the fourth type 104 of portion of the surface area.

Additionally, the outer boundary 111 of the first type 101 of portion of the surface area of the foil 24 coincides with the inner boundary 124 of the fourth type 104 of portion of the surface of the foil 24.

As indicated above, in the capsule 2 of Fig. 16A/B, the exit openings 25 are not distributed over the full third type 103 of portion of the surface area of the foil 24 where the foil is covered by the filter layer 26.The third type 103 of portion of the surface area of the foil 24 comprises the fifth type 105 of portion of the surface area of the foil 24 which is covered by the filter layer 26 but is free from exit openings 25. The fifth type 105 of portion of the surface area of the foil 24 forms a substantially circumferential area of the foil 24 laying adjacent the circumferential wall 14. As indicated above, the third type 103 of portion of the surface area of the foil also comprises the fourth type 104 of portion of the surface area of the foil wherein exit openings 25 are provided which are covered by the filter layer 26.

In this example, the fifth type 105 of surface area of the foil 24 and the fourth type 104 of portion of surface area of the foil 24 are each ring shaped and lay adjacent to each other. The fifth type 105 of surface area of the foil 24 surrounds the fourth type 104 of portion of surface area of the foil 24.

An extractable product having the same properties which caused the capsule 2P of Fig. 11A to block may now be brewed. The filter layer 26 between the extractable product, i.e. roast and ground coffee, and the foil 24 with exit openings 25 of the lid 20, catches the fines of the coffee. The fines will spread in the filter layer 26 before reaching the exit openings 25 in the foil 24. In this way, at least not all fines will reach the exit openings 25, while a flow restriction is still formed. Additionally, the presence of a filter layer 26 may allow a preferred flow to form through the filter layer 26, because the flow resistance through the filter layer is smaller than the flow resistance through the compacted extractable product.

Additionally, it is believed that during brewing, in this example, the preferred flow, which has formed along the circumferential wall 14 may enter the filter layer 26 covering the fifth type 105 portion of the surface area of the foil 24 and flow in an inwardly radial direction towards and subsequently through the filter layer 26 covering the fourth portion 104 of the foil 24. Some of the preferred flow exits through the plurality of exit openings 25 distributed over the fourth portion 104 of the foil 24. Additionally part of the preferred flow may continue in an inwardly radial direction towards the, in this example, coinciding first type 101 and second type 102 of portion of the surface area of the foil 24, and exit through the exit opening 25 provided in the surface area of the foil 24 in the first type 101 portion. Preferably, as in this example, the fifth type 105 portion surrounds the fourth type 104 portion. Hence, the filter layer 26 covering the fifth type 105 portion of the surface area of the foil 24, bounded by the inner space 23, acts as a guide, and leading the preferred flow to the exit openings 25 of the fourth type 104 portion and the first type 101 portion.

In this example, the brewing times are reasonable, and controllable. In addition a relatively high amount of DMA in the beverage is obtained. This may be caused by the fact that there are not any exit openings 25 in the direct vicinity of the circumferential wall 14. In this way, the preferential flows near the circumferential wall 14 must flow radially inward in order to exit. Moreover the plurality of exit opening 25 in the first type 101 portion of the foil 24, may be at least partly blocked by fines resulting in a thick layer of crema.

For this capsule 2 depicted in Figure 16A/B, brewing times for an espresso beverage were in the range of 32-37 seconds. The crema layer was in the range of 5,5 mm - 7 mm. DMA was between 3.48% and 3.62%.

Capsules having a non-woven filter layer 26 were also tested. The capsules were the same as the capsule 2 of Figure 16A/B except instead a filter layer formed from filter paper having a density of 22 g/m2, and air permeability of 517 mm/s at 200Pa and a thickness of 0.1 mm a non-woven filter layer 26 was used. Using a non-woven mesh having a thickness of 300 µm. Brewing time for an espresso beverage was reduced reliably in a range of 14-16 seconds. The crema layer was in the range of 4 mm - 5.5 mm. DMA was between 3.12% and 3.26%.

In this example, the non-woven filter layer 23 having a thickness of 300 µm fills approximately 6% of the volume of the inner space of the capsule 23, which in this example is 12 ml. By reserving a volume of the inner space of the capsule which is filled by the filter layer 23 provides, in use, a volume of the capsule in which a preferred flow may be established and/or through which a preferred flow may flow. Preferably, as in this example, a flow resistance of the filter layer 26 is, estimated by modelling, 10-30 times smaller than a flow resistance of the extractable product in the inner space 23, when being extracted with a fluid under a pressure.

It is believed that during brewing, in this example, the preferred flow, which has formed along the circumferential wall 14 may enter the non-woven filter layer 26 covering the fifth type 105 portion of the surface area of the foil 24 and flow in an inwardly radial direction towards and subsequently through the filter layer 26 covering the fourth portion 104 of the foil 24. Some of the preferred flow exits through the plurality of exit openings 25 distributed over the fourth portion 104 of the foil 24. Additionally part of the preferred flow may continue in an inwardly radial direction towards the first type 101 of portion of the surface area of the foil 24, and exit through the exit opening 25 provided therein.

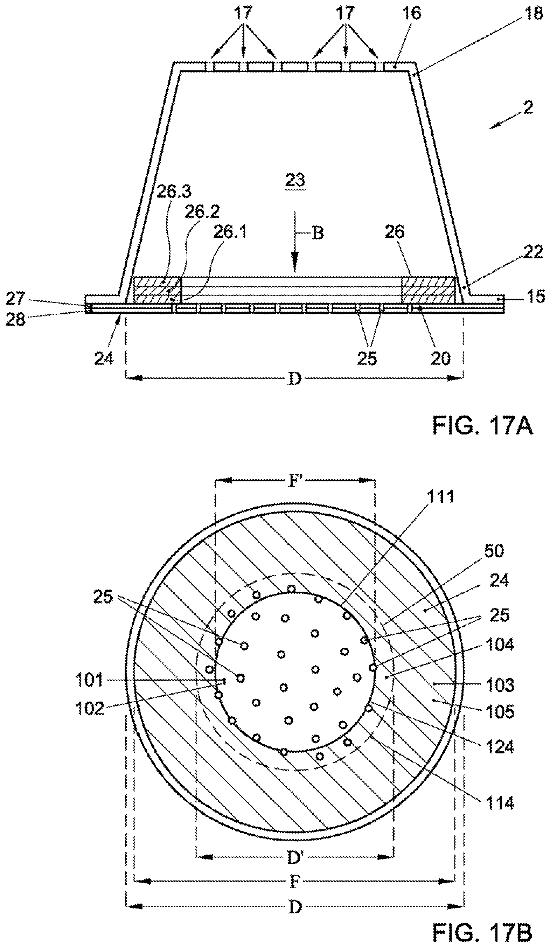

In Figure 17A/B a capsule 2 according to the invention and similar to the capsule 2 of Figure 16A/B is shown. The capsule 2 of Figure 17A/B differs from the capsule 2 of Figure 16A/B in that the filter layer 26 of the capsule 2 of Figure 17A/B comprises 3 sub-layers 26.1-26.3. Each sub layer 26.i is ring-shaped. The ring has a 22 mm inner diameter, F', and an outer diameter F, equal to the diameter of the inner space 23 of the capsule measured along the inside surface of the foil 24. Furthermore, each sub layer 26.i is formed from filter paper having a density of 22 g/m2, and air permeability of 517 mm/s at 200Pa and a thickness of 0.1 mm.

Therefore in terms of the percentage of covered exit openings 25 and so forth the capsule 2 of Figures 16A/B and Figures 17A/B are the same. The filter layer of the capsule 2 of Figure 17A/B does provide a larger volume. However the capsule of Figure 17A/B provides 3 times more volume for a preferred path to flow through. The capsule 2 using a filter layer 26 comprising sub layer 26.i also shown a reliable reduction of brewing time, high DMA percentages, and an acceptable crema layer.

Figure 18A shows a capsule 2 according to the invention. In this example a strip of filter paper having a density of 22 g/m2, and air permeability of 517 mm/s at 200Pa and a thickness of 0.1 mm forms a filter layer 26. The filter layer 26 is positioned across the foil 24 between the extractable product in the inner space 23 and the lid 20, which comprises a multilayer foil 24 with a plurality of exit openings 25. In this example, the multilayer foil 24 has 141 exit openings 25 distributed in a pattern within an area defined by a circle 50 having a diameter of D', 22.5 mm. The circle 50 is concentric with the surface area of the foil 24 defined by the second open end 22.

In Figures 18A/B, the capsule 2 also has an inner space with a volume of 12 ml. However, in this example, the inner space 23 of the capsule 2 is filled with 5.8 gm of ground roasted coffee. The coffee has a pouring volume of approximately 705-710 ml/250g and a particle density X50 of 262.21 µm. The percentage of fines, i.e. particles smaller than 100 µm is 22.22%. In this example, each exit opening 25 of the capsule 2 has an average diameter of 300 µm before brewing.

The filter layer 26, in this example, is strip-shaped and has a length of 29 mm, equal to the diameter D of the open end 22 of the capsule 2. The width F' is equal to 6 mm

As shown in Fig. 18B, a plurality of exit openings 25 is covered by the filter layer 26, and a plurality of exit openings 25 is not covered by the filter layer 26. The plurality of exit openings 25 not covered by the filter layer 26 directly faces the extractable product contained in the inner space 23. The first surface P of the filter layer 26 abuts against the multilayer foil 24, at least to the surface S opposing the filter layer 26 and may be pressed between the roast and ground coffee and the multilayer foil 24 to keep the filter layer 26 in place. A second surface P' of the filter layer 26, which is opposite the first surface P of the filter layer 26, directly faces the extractable product contained in the inner space 23.

If the exit openings are evenly distributed relative to each other the following can be calculated. In this example, the plurality of the exit openings 25 which are not covered by the filter layer 26 forms 75% of the exit openings 25. The plurality of exit openings 25 which are covered by the filter layer 26 forms 25% of the total number of exit openings. The surface area of the foil 24 which is not covered by the filter layer comprises 81% of the total surface area of the foil which forms the boundary of the inner space 23 of the capsule 2. The surface area of the foil 24 which is covered by the filter layer comprises 19% of the total surface area of the foil which forms the boundary of the inner space 23 of the capsule 2.

The plurality of exit openings which are not covered by the filter layer are distributed over R*81% of the total surface area of the foil which forms a boundary of the inner space of the capsule and the plurality of exit openings which are covered by the filter layer are distributed over Q*19% of the total surface area of the foil which forms a boundary of the inner space of the capsule. In this example, R is approximately 0.55, and Q is approximately to 0.77.

In this example, due to the strip-shaped filter, a first type of portion of the surface area of the foil wherein a plurality of exit openings 25 are distributed which are not covered by the filter layer 26 lays at least substantially completely at a distance from the circumferential wall, comprised as two discrete a first type of portions 101A and 101B of the surface area of the. As the exit openings 25 are confined to a circle 50 with a radius of D', equal to 22.5 mm, 100% of the length of both outer boundaries of the first portion 111A /B lay at a distance from the circumferential wall 14. The shortest distance from the circumferential wall 14 to the outer boundaries 11A/B measured along the foil 24 is at least D/2 - D'/2, 3.25 mm.

A third type of portion 103 of the surface area of the foil which is covered by the filter layer lays at least substantially completely adjacent the circumferential wall 14 for 17% of its outer boundary 113. Substantially completely adjacent implies that a distance measured along the foil 24 from the outer edge of the filter 26 to the circumferential wall 14 is smaller than 3% of D.

In this example, because of the strip shape of the filter layer 26 and the exit openings being contained in a centred circle of 22.5 mm, 100% of the length of an outer boundary 114 of a fourth type 104 of portion of the surface area of the foil 24 wherein the plurality of exit openings 25 are distributed which are covered by the filter layer 26 lays at a distance to the circumferential wall 14. The distance is 3.25 mm, or D/2-D'/2. Thus the outer boundary 114 of the fourth type 104 portion is completely at a distance from the circumferential side wall 14. The fourth type 104 of portion of the surface also comprises an inner boundary 124.

In this example, the third type 103 of portion of surface area and a fourth type 104 of portion of the surface area the surface area of the foil 24 wherein the plurality of exit openings 25 are distributed and which is covered by the filter layer 26 are not the same. A circumferential area of the foil which is adjacent the circumferential wall forms a fifth type of portion of the surface area of the foil which is not provided with the exit openings 25 and which is covered by the filter layer 26 comprised as two discrete portions 105A and 105B separated by the fourth type 104 portion. The fifth type 105A /B of portion of the surface area of the foil 24 forms the difference between the third type 103 of portion of the surface area and the fourth type 104 of portion of the surface area.

As indicated above, in the capsule 2 of Fig. 18A/B, the exit openings 25 are not distributed over the full third type 103 of portion of the surface area of the foil 24 where the foil is covered by the filter layer 26.The third type 103 of portion of the surface area of the foil 24 comprises the fifth type 105A/B of portion of the surface area of the foil 24 which is covered by the filter layer 26 but is free from exit openings 25. The fifth type105A/B of portion of the surface area of the foil 24 forms an area of the foil 24 laying adjacent the circumferential wall 14 at the second open end of the capsule 22 for approximately 13% of a perimeter of the surface area of the foil 24 bound by the inner space 23 at the second open end 22 of the capsule. As indicated above, the third type 103 of portion of the surface area of the foil also comprises the fourth type 104 of portion of the surface area of the foil wherein exit openings 25 are provided which are covered by the filter layer 26.

Although the fifth type portion 105A/B is only adjacent to the circumferential wall for 13% of the perimeter 150 of the surface area of the foil 24 bound by the inner space 23 at the second open end 22 of the capsule 2. It is believed that the filter layer 26 between the extractable product, i.e. roast and ground coffee, and the foil 24 with exit openings 25 of the lid 20, catches the fines of the coffee. The fines will spread in the filter layer 26 before reaching the exit openings 25 in the foil 24. In this way, at least not all fines will reach the exit openings 25. Additionally, the presence of a filter layer 26 may allow a preferred flow to form through the filter layer 26, because the flow resistance through the filter layer is smaller than the flow resistance through the compacted extractable product. Finally, it is believed that as the filter layer 26 is adjacent to 13% of the perimeter 150 of the surface area of the foil 24 bound by the inner space 23 at the second open end 22 of the capsule 2. A preferred flow along the circumferential sidewall 14 may continue its path into the filter layer 26 and may leave the capsule via the exit openings 25 laying in the fourth type 104 of portion of the surface area of the foil 24. Possibly other exit openings which are not covered by the filter layer 26, located in first type 101 of portion of the surface are of the foil 24 may be partly blocked so that on average a good brewing time, crema layer and DMA can be obtained.

For this capsule 2 depicted in Figure 18A/B, brewing times for a lungo coffee were in the range of 55-61 seconds. The crema layer was in the range of 5.5 mm - 6 mm. DMA was between 3.16% and 1.43% - 1.45%.

It will be clear that a filter layer as shown in the capsules according to the invention may be embodied a plurality of discrete filter layers. The discrete filter layers may be secured to the foil and/or held in place by the foil and the extractable product in the inner space of the capsule. The layout of the discrete filter layers may be considered a filter layer.

Furthermore, it will be appreciated that the figures are schematic. The depiction of the exit opening is purely schematic. Different sizes of exit openings, different distribution patterns, for example a hexagonal patter, and densities are all considered to fall under the scope of this invention.

The flow resistance of the discussed filter layers 26 may for example be characterized by T wherein, while using a filter paper test device of the Herzberg design from Schroder Pruftechnik, T is the time in seconds for 100 ml of water to flow through an area of 10 cm2 of a sample of the filter layer in a direction perpendicular to a plane wherein the sample lays, with a starting water column of 33 cm, wherein the water temperature is at 20 degree C, wherein T lays in the range of 4-150, preferably 4-30, more preferably 5-20, for example in the range of 4-15 for filtering paper, for example in the range of 60-150 for white non woven and for example in the range of 45-80 for blue non woven.

It is also noted that brewing properties, such as brew time, crema layer, and DMA also depend on the extractable product contained in the inner space 23 of the capsule 2 and the obtained volume of the beverage.

In the foregoing specification, the invention has been described with reference to specific examples of embodiments of the invention. It will, however, be evident that various modifications and changes may be made therein without departing from the scope of the invention as set forth in the appended claims.

It is for instance possible that the capsule is contained in an air tight wrapping prior to use to improve shelf-life.

It is for instance possible that the capsule 2 has different dimensions or different shapes. In the examples the circumferential first wall 14 is substantially cylindrical. It will be appreciated that the capsule according to the invention is not limited to this shape. The circumferential first wall 14 may e.g. be frustoconical, hemispherical, or polygonal, such as hexagonal, octagonal, etc.

However, other modifications, variations and alternatives are also possible. The specifications, drawings and examples are, accordingly, to be regarded in an illustrative rather than in a restrictive sense.

In the claims, any reference signs placed between parentheses shall not be construed as limiting the claim. The word 'comprising' does not exclude the presence of other features or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. Capsule (2) for preparing a predetermined quantity of beverage suitable for consumption using an extractable product, for instance roast and ground coffee, comprising:
a substantially rigid circumferential wall (14),
a bottom (16) closing the circumferential wall at a first end (18), and
a lid (20, 20', 20",20"') closing the circumferential wall at a second, open, end (22) opposite the bottom, wherein the circumferential wall, the bottom and the lid enclose an inner space (23) comprising the extractable product, wherein the lid (20, 20', 20",20"') comprises a flexible foil (24), said foil having a plurality of exit openings (25) defining an exit area for draining of the prepared beverage, wherein inside the capsule (2) between the extractable product and the lid (20, 20', 20",20"') a substantially sheet shaped filter layer (26) is provided, **characterized in that** at least one exit opening is covered by the filter layer (26) and at least one exit opening is not covered by the filter layer (26), wherein the at least one exit opening which is not covered by the filter layer directly faces the extractable product.

2. Capsule according to claim 1, wherein the substantially sheet shaped filter layer (26) comprises a layer of paper filtering material, a layer of non-woven material, or a layer of woven material.

3. Capsule according to claim 1 or 2, wherein in a centre area of said filter layer an opening is provided.

4. Capsule according to claim 2 or claim 3 when dependent on claim 2, wherein the layer of paper filtering material is of paper having a weight of approximately 1-250 grams/m2, more preferably between 10-100 grams/m2, preferably approximately 15-50 grams/m2.

5. Capsule according to claim 2 or 4, or claim 3 when dependent on claim 2, wherein the layer (26) of non-woven material comprises a synthetic material comprising a structured network of fibers and/or meshes, for instance high density polyethylene (HDPE) fibres.

6. Capsule according to any one of the preceding claims, wherein the filter layer (26) has an air permeability of 0-2000 mm/second measured at a pressure of approximately 200 Pascal.

7. Capsule according to any one of claims 4-6, wherein the filter layer (26) is provided with a plastic such as polyethylene (PE) or is coated to enhance the sealing properties for sealing the filter layer (26) to the foil (24).

8. Capsule according to any one of the preceding claims, wherein a plurality of openings are not covered by the filter layer.

9. Capsule according to claim 8, wherein the plurality of exit openings which are not covered by the filter layer directly faces the extractable product.

10. Capsule according to any one of the preceding claims, wherein a plurality of exit openings is covered by the filter layer.

11. Capsule according to claim 8 and claim 10, wherein the plurality of exit openings which are not covered by the filter layer form x% of the total number of exit openings and wherein the at least one exit opening which is covered by the filter layer or the plurality of exit openings which are covered by the filter layer form (100-x)% of the total number of exit openings wherein x lays in the range of 29-99.5, preferably in the range of 44-99.5, more preferably in the range of 54-99.5.

12. Capsule according to any one of the preceding claims, wherein the surface of the foil which is not covered by the filter layer comprises p% of the total surface area of the foil which forms a boundary of the inner space of the capsule wherein p lays in the range of 10-85, preferably in the range of 30-80, more preferably in the range of 38-75.

13. Capsule according to claim 12, wherein the plurality of exit openings which are not covered by the filter layer are distributed over R*p% of the total surface area of the foil which forms a boundary of the inner space of the capsule and
the plurality of exit openings which are covered by the filter layer are distributed over Q* (100-p)% of the total surface area of the foil which forms a boundary of the inner space of the capsule

14. Capsule according to claim 13, wherein: preferably R is within the range of 0.9-1 or is equal to 1 and Q lays in the range of 0.05-1, preferably in the range of 0.25-0.9, more preferably in the range of 0.25-0.6 or
R is larger than 0.4 and Q is smaller or equal to 1.

15. Capsule according to any preceding claim wherein the filter layer extends to the circumferential wall.

16. Capsule according to claim 15 wherein the filter layer extends to each position of the circumferential wall adjacent the foil.

17. Capsule according to any of the preceding claims wherein the filter layer fills c% of the volume of the inner space of the capsule wherein c lays within the range of 0.1-8, preferably within the range of 0.1-6.5, more preferably within the range of 0.1-3.

18. Capsule according to any of the preceding claims, wherein a flow resistance of the filter layer is **characterized by** T wherein, while using a filter paper test device of the Herzberg design, T is the time in seconds for 100 ml of water to flow through an area of 10 cm2 of a sample of the filter layer in a direction perpendicular to a plane wherein the sample lays, with a starting water column of 33 cm, wherein the water temperature is at 20 degree C, wherein T lays in the range of 4-150, preferably 4-30, more preferably 5-20, for example in the range of 4-15 for filtering paper, for example in the range of 60-150 for white non woven and for example in the range of 45-80 for blue non woven.

19. Capsule according to claim 3 wherein the filter layer has the shape of a ring wherein an outer circumferential boundary of the filter layer lays adjacent the circumferential wall and wherein preferably the centre area has a cross section of S mm wherein S lays in the range of 14-24, preferably in the range of 16-22 and more preferably within the range of 18-20 and wherein preferably the outer diameter of the portion of the filter layer which forms a boundary of the inner space has across section of about 28-30mm and/or wherein preferably the diameter of the inner space near the foil is about 28-30mm .

20. Capsule according to claim 1 or 2, wherein the filter layer has the shape of a strip having two opposite ends laying adjacent the circumferential wall and two opposite sides each laying at a distance from the circumferential wall.

21. Capsule according to any preceding claim wherein the filter layer has a thickness of T mm wherein T is in the range of 0.05-0.01, excluding 0.01, or 0.01-1 or 1-10 excluding 1, preferably 0.05 - 0.5 , more preferably 0.05-0.2.

22. Capsule according to any preceding claim wherein the filter layer comprises a stack of sub filter layer wherein each sub filter layer is sheet shaped, wherein preferably the stack comprises 2-6 sub filter layers.

23. Capsule according to any preceding claim wherein the filter layer is divided into filter layer pieces positioned in a plane parallel to the foil.

24. System for preparing a predetermined quantity of beverage suitable for consumption using an extractable product, comprising:
an exchangeable capsule (2) according to any one of the preceding claims, and
an apparatus (4) comprising a receptacle (6) for holding the exchangeable capsule, and a fluid dispensing device (5) for supplying an amount of a fluid, such as water, under pressure to the exchangeable capsule,
wherein the fluid dispensing device (5) is arranged for supplying the fluid to the extractable product through the bottom (16) for forming the beverage,
wherein the receptacle (6) comprises a support surface (10), and wherein the capsule (2) arranged to at least partly abut against the support surface (10) for draining the prepared beverage from the capsule (2) through the lid (20, 20', 20",20"') and through the support surface (10),
wherein the system comprises an outlet (32) which, in use, is in fluid communication with the lid (20, 20', 20", 20"') for draining the prepared beverage from the capsule (2) and supplying the beverage to a container such as a cup.

25. System according to claim 24 wherein the fluid is supplied under a pressure of 4-20 bar, preferably under 9-18 bar.

## Patentansprüche

1. Kapsel (2) zur Herstellung einer vorbestimmten Menge eines für den Konsum geeigneten Getränks unter Verwendung eines extrahierbaren Produkts, zum Beispiel geröstetem und gemahlenem Kaffee, umfassend:
eine im Wesentlichen starre, umlaufende Wand (14),
einen Boden (16), der die umlaufende Wand an einem ersten Ende (18) verschließt,
und
einen Deckel (20, 20', 20", 20"'), der die umlaufende Wand an einem zweiten offenen Ende (22) gegenüber dem Boden verschließt, wobei die umlaufende Wand, der Boden und der Deckel einen Innenraum (23) einschließen, der das extrahierbare Produkt umfasst, wobei der Deckel (20, 20', 20", 20"') eine flexible Folie (24) umfasst, welche flexible Folie eine Vielzahl von Ausgangsöffnungen (25) hat, die einen Ausgangsbereich zum Ablassen des hergestellten Getränks definieren, wobei im Inneren der Kapsel (2) zwischen dem extrahierbaren Produkt und dem Deckel (20, 20', 20", 20"') eine im Wesentlichen blattförmige Schicht (26) bereitgestellt ist, **dadurch gekennzeichnet, dass** mindestens eine Ausgangsöffnung von der Filterschicht (26) bedeckt ist und mindestens eine Ausgangsöffnung nicht von der Filterschicht (26) bedeckt ist, wobei die mindestens eine Ausgangsöffnung, die nicht von der Filterschicht bedeckt ist, dem extrahierbaren Produkt direkt gegenüber liegt.

2. Kapsel nach Anspruch 1, wobei die im Wesentlichen blattförmige Filterschicht (26) eine Schicht aus Papierfiltermaterial, eine Schicht aus ungewebtem Material oder eine Schicht aus gewebtem Material umfasst.

3. Kapsel nach Anspruch 1 oder 2, wobei in einem Mittelbereich der Filterschicht eine Öffnung bereitgestellt ist.

4. Kapsel nach Anspruch 2 oder Anspruch 3, wenn abhängig von Anspruch 2, wobei die Schicht aus Papierfiltermaterial aus Papier mit einem Gewicht von ungefähr 1-250 Gramm/m2 ist, bevorzugter zwischen 10-100 Gramm/m2, bevorzugt ungefähr 15-50 Gramm/m2.

5. Kapsel nach Anspruch 2 oder 4, oder Anspruch 3, wenn abhängig von Anspruch 2, wobei die Schicht (26) aus ungewebtem Material ein Synthetikmaterial, umfassend ein strukturiertes Netz aus Fasern und/oder Maschen, zum Beispiel HDPE (engl. High density polyethylene)-Fasern, umfasst.

6. Kapsel nach einem der vorhergehenden Ansprüche, wobei die Filterschicht (26) eine Luftdurchlässigkeit von 0-2000 mm/Sekunde, gemessen bei einem Druck von ungefähr 200 Pascal, hat.

7. Kapsel nach einem der Ansprüche 4-6, wobei die Filterschicht (26) mit einem Kunststoff, wie etwa Polyethylen (PE), versehen ist oder beschichtet ist, um die Dichtungseigenschaften zum Dichten der Filterschicht (26) zu der Folie (24) zu verbessern.

8. Kapsel nach einem der vorhergehenden Ansprüche, wobei eine Vielzahl von Öffnungen nicht von der Filterschicht bedeckt werden.

9. Kapsel nach Anspruch 8, wobei die Vielzahl von Ausgangsöffnungen, die nicht von der Filterschicht bedeckt werden, direkt dem extrahierbaren Produkt gegenüberliegen.

10. Kapsel nach einem der vorhergehenden Ansprüche, wobei eine Vielzahl von Ausgangsöffnungen von der Filterschicht bedeckt werden.

11. Kapsel nach Anspruch 8 und Anspruch 10, wobei die Vielzahl von Ausgangsöffnungen, die nicht von der Filterschicht bedeckt werden, x % der Gesamtanzahl von Ausgangsöffnungen bilden und wobei die mindestens eine Ausgangsöffnung, die von der Filterschicht bedeckt wird oder die Vielzahl von Ausgangsöffnungen, die von der Filterschicht bedeckt werden, (100-x) % der Gesamtanzahl von Ausgangsöffnungen bilden, wobei x im Bereich von 29-99,5 liegt, bevorzugt im Bereich von 44-99,5, bevorzugter im Bereich von 54-99,5.

12. Kapsel nach einem der vorhergehenden Ansprüche, wobei die Oberfläche der Folie, die nicht von der Filterschicht bedeckt wird, p % des gesamten Oberflächenbereichs der Folie, der eine Begrenzung des Innenraums der Kapsel bildet, umfasst, wobei p im Bereich von 10-85 liegt, bevorzugt im Bereich von 30-80, bevorzugter im Bereich von 38-75.

13. Kapsel nach Anspruch 12, wobei die Vielzahl von Ausgangsöffnungen, die nicht von der Filterschicht bedeckt werden, über R*p % des gesamten Oberflächenbereichs der Folie, der eine Begrenzung des Innenraums der Kapsel bildet, verteilt sind, und
die Vielzahl von Ausgangsöffnungen, die von der Filterschicht bedeckt werden, über Q* (100-p) % des gesamten Oberflächenbereichs der Folie, der eine Begrenzung des Innenraums der Kapsel bildet, verteilt sind.

14. Kapsel nach Anspruch 13, wobei: bevorzugt R innerhalb des Bereichs von 0,9-1 ist oder gleich 1 ist und Q im Bereich von 0,05-1 liegt, bevorzugt im Bereich von 0,25-0,9, bevorzugter im Bereich von 0,25-0,6, oder
R größer als 0,4 ist und Q kleiner als oder gleich 1 ist.

15. Kapsel nach einem der vorhergehenden Ansprüche, wobei die Filterschicht zu der umlaufenden Wand verläuft.

16. Kapsel nach Anspruch 15, wobei die Filterschicht zu jeder Position der umlaufenden Wand, angrenzend an die Folie, verläuft.

17. Kapsel nach einem der vorhergehenden Ansprüche, wobei die Filterschicht c % des Volumens des Innenraums der Kapsel füllt, wobei c im Bereich von 0,1-8 liegt, bevorzugt im Bereich von 0,1-6,5, bevorzugter im Bereich von 0,1-3.

18. Kapsel nach einem der vorhergehenden Ansprüche, wobei ein Fließwiderstand der Filterschicht durch T gekennzeichnet wird, wobei, bei Verwendung einer Filterpapier-Testvorrichtung vom Herzberg-Design, T die Zeit in Sekunden ist, in der 100 ml Wasser durch einen Bereich von 10 cm2 einer Probe der Filterschicht in eine Richtung, die senkrecht zu einer Ebene ist, fließen, wobei die Probe bei einer Startwassersäule von 33 cm liegt, wobei die Wassertemperatur bei 20 Grad C ist, wobei T im Bereich von 4-150, bevorzugt 4-30, bevorzugter 5-20, zum Beispiel im Bereich von 4-15 für Filterpapier liegt, zum Beispiel im Bereich von 60-150 für weißes ungewebtes und zum Beispiel im Bereich von 45-80 für blaues ungewebtes.

19. Kapsel nach Anspruch 3, wobei die Filterschicht die Form eines Ringes hat, wobei eine äußere umlaufende Begrenzung der Filterschicht neben der umlaufenden Wand liegt und wobei bevorzugt der Mittelbereich einen Querschnitt von S mm hat, wobei S im Bereich von 14-24 liegt, bevorzugt im Bereich von 16-22 und bevorzugter im Bereich von 18-20, und wobei bevorzugt der Außendurchmesser des Abschnitts der Filterschicht, der eine Begrenzung des Innenraums bildet, einen Querschnitt von ungefähr 28-30 mm hat und/oder wobei bevorzugt der Durchmesser des Innenraums nahe der Folie ungefähr 28-30 mm ist.

20. Kapsel nach Anspruch 1 oder 2, wobei die Filterschicht die Form eines Streifens hat, mit zwei entgegengesetzten Enden, die neben der umlaufenden Wand liegen, und zwei entgegengesetzten Seiten, die jeweils in einem Abstand von der umlaufenden Wand liegen.

21. Kapsel nach einem der vorhergehenden Ansprüche, wobei die Filterschicht eine Dicke von T mm hat, wobei T im Bereich von 0,05-0,01, ausschließlich 0,01, oder 0,01-1 oder 1-10, ausschließlich 1, bevorzugt 0,05-0,5, bevorzugter 0,05-0,2, ist.

22. Kapsel nach einem der vorhergehenden Ansprüche, wobei die Filterschicht einen Stapel von Subfilterschichten umfasst, wobei jede Subfilterschicht blattförmig ist, wobei bevorzugt der Stapel 2-6 Subfilterschichten umfasst.

23. Kapsel nach einem der vorhergehenden Ansprüche, wobei die Filterschicht in zwei Filterschichtteile, die in einer Ebene parallel zu der Folie positioniert sind, geteilt ist.

24. System zur Herstellung einer vorbestimmten Menge eines für den Konsum geeigneten Getränks unter Verwendung eines extrahierbaren Produkts, umfassend:
eine austauschbare Kapsel (2) nach einem der vorhergehenden Ansprüche und
eine Vorrichtung (4), umfassend ein Behältnis zum Aufnehmen der austauschbaren Kapsel und eine Flüssigkeitsausgabevorrichtung (5) zum Zuführen einer Menge einer Flüssigkeit, wie etwa Wasser, zu der austauschbaren Kapsel,
wobei die Flüssigkeitsausgabevorrichtung (5) zum Zuführen der Flüssigkeit zu dem extrahierbaren Produkt durch den Boden (16) angeordnet ist, um das Getränk zu bilden,
wobei das Behältnis (6) eine Stützfläche (10) umfasst und wobei die Kapsel (2) angeordnet ist, um mindestens teilweise gegen die Stützfläche (10) zu stoßen, um das hergestellte Getränk aus der Kapsel (2) durch den Deckel (20, 20', 20", 20"') und durch die Stützfläche (10) abzulassen,
wobei das System einen Auslass (32) umfasst, der, bei Verwendung, in Flüssigkeitskommunikation mit dem Deckel (20, 20', 20", 20"') ist, um das hergestellte Getränk aus der Kapsel (2) abzulassen und das Getränk einem Behälter, wie etwa einer Tasse, zuzuführen.

25. System nach Anspruch 24, wobei die Flüssigkeit unter einem Druck von 4-20 Bar, bevorzugt unter 9-18 Bar, zugeführt wird.

## Revendications

1. Capsule (2) pour la préparation d'une quantité prédéterminée de boisson adaptée à la consommation à l'aide d'un produit extractible, comme par exemple du café torréfié et moulu, comprenant :
une paroi circonférentielle sensiblement rigide (14),
un fond (16) fermant la paroi circonférentielle à une première extrémité (18), et
un couvercle (20, 20', 20", 20"') fermant la paroi circonférentielle à une seconde extrémité ouverte (22) opposée au fond, la paroi circonférentielle, le fond et le couvercle contenant un espace intérieur (23) comprenant le produit extractible, le couvercle (20, 20', 20", 20"') comprenant une feuille flexible (24), ladite feuille ayant une pluralité d'ouvertures de sortie (25) définissant une zone de sortie destinée à évacuer la boisson préparée, une couche filtrante sensiblement en forme de feuille étant prévue à l'intérieur de la capsule (2) entre le produit extractible et le couvercle (20, 20', 20", 20"'), **caractérisée en ce qu'**au moins une ouverture de sortie est recouverte par la couche filtrante (26), et au moins une ouverture de sortie n'est pas recouverte par la couche filtrante (26), dans laquelle l'une ouverture de sortie au moins qui n'est pas recouverte par la couche filtrante fait directement face au produit extractible.

2. Capsule selon la revendication 1, dans laquelle la couche filtrante sensiblement en forme de feuille (26) comprend une couche de matériau filtrant en papier, une couche de matériau non tissé, ou une couche de matériau tissé.

3. Capsule selon la revendication 1 ou 2, dans laquelle une ouverture est prévue dans une zone centrale de ladite couche filtrante.

4. Capsule selon la revendication 2 ou la revendication 3 lorsqu'elle dépend de la revendication 2, dans laquelle la couche de matériau filtrant en papier est constituée de papier ayant un poids d'environ 1 à 250 grammes/m², de préférence d'environ 10 à 100 grammes/m², encore plus de préférence d'environ 15 à 50 grammes/m².

5. Capsule selon la revendication 2 ou 4, ou la revendication 3 lorsqu'elle dépend de la revendication 2, dans laquelle la couche (26) de matériau non tissé comprend un matériau synthétique comprenant un réseau structuré de fibres et/ou de mailles, comme par exemple des fibres en polyéthylène (PEHD) à haute densité.

6. Capsule selon l'une quelconque des revendications précédentes, dans laquelle la couche filtrante (26) possède une perméabilité à l'air de 0 à 2000 mm/seconde mesurée à une pression d'environ 200 Pascal.

7. Capsule selon l'une quelconque des revendications 4 à 6, dans laquelle la couche filtrante (26) est munie d'un plastique tel que du polyéthylène (PE) ou est recouverte afin d'améliorer les propriétés d'étanchéité pour sceller la couche filtrante (26) sur la feuille (24).

8. Capsule selon l'une quelconque des revendications précédentes, dans laquelle plusieurs ouvertures ne sont pas recouvertes par la couche filtrante.

9. Capsule selon la revendication 8, dans laquelle les ouvertures de sortie qui ne sont pas recouvertes par la couche filtrante font directement face au produit extractible.

10. Capsule selon l'une quelconque des revendications précédentes, dans laquelle plusieurs des ouvertures de sortie sont recouvertes par la couche filtrante.

11. Capsule selon la revendication 8 et la revendication 10, dans laquelle les ouvertures de sortie qui ne sont pas recouvertes par la couche filtrante forment x% du nombre total d'ouvertures de sortie, et dans laquelle l'ouverture de sortie au moins qui est recouverte par la couche filtrante ou les ouvertures de sortie qui sont recouvertes par la couche filtrante forment (100-x)% du nombre total d'ouvertures de sortie, x étant compris entre 29 et 99,5, de préférence entre 44 et 99,5, encore plus de préférence entre 54 et 99,5.

12. Capsule selon l'une quelconque des revendications précédentes, dans laquelle la surface de la feuille qui n'est pas recouverte par la couche filtrante comprend p% de la surface totale de la feuille qui forme une limite de l'espace interne de la capsule, p étant compris entre 10 et 85, de préférence entre 30 et 80, encore plus de préférence entre 38 et 75.

13. Capsule selon la revendication 12, dans laquelle les ouvertures de sortie qui ne sont pas recouvertes par la couche filtrante sont réparties sur R*p% de la surface totale de la feuille qui forme une limite de l'espace interne de la capsule, et
les ouvertures de sortie qui sont recouvertes par la couche filtrante sont réparties sur Q*(100-p)% de la surface totale de la feuille qui forme une limite de l'espace interne de la capsule.

14. Capsule selon la revendication 13, dans laquelle R est de préférence compris entre 0,9 et 1 ou est égal à 1, et Q est compris entre 0,05 et 1, de préférence entre 0,25 et 0,9, encore plus de préférence entre 0,25 et 0,6, ou R est supérieur à 0,4 et Q est inférieur ou égal à 1.

15. Capsule selon l'une quelconque des revendications précédentes, dans laquelle la couche filtrante s'étend jusqu'à la paroi circonférentielle.

16. Capsule selon la revendication 15, dans laquelle la couche filtrante s'étend jusqu'à chaque emplacement de la paroi circonférentielle adjacente à la feuille.

17. Capsule selon l'une quelconque des revendications précédentes, dans laquelle la couche filtrante remplit c% du volume de l'espace intérieur de la capsule, c étant compris entre 0,1 et 8, de préférence entre 0,1 et 6,5, encore plus de préférence entre 0,1 et 3.

18. Capsule selon l'une quelconque des revendications précédentes, dans laquelle une résistance à l'écoulement de la couche filtrante est **caractérisée par** T, laquelle, pendant l'utilisation d'un dispositif de test en papier filtrant de type Herzberg, T correspond à la durée en secondes nécessaire à 100 ml d'eau pour s'écouler sur une surface de 10 cm2 d'un échantillon de la couche filtrante dans une direction perpendiculaire à un plan sur lequel l'échantillon se trouve, avec une colonne d'eau de départ de 33 cm, la température de l'eau étant de préférence de 20 degrés Celsius, T étant compris entre 4 et 150, de préférence entre 4 et 30, encore plus de préférence entre 5 et 20, comme par exemple entre 4 et 15 pour le papier filtrant, comme par exemple entre 60 et 150 pour le tissu blanc non tissé, et comme par entre 45 et 80 pour le tissu bleu non tissé.

19. Capsule selon la revendication 3, dans laquelle la couche filtrante possède une forme d'anneau dans laquelle une limite circonférentielle extérieure de la couche filtrante est adjacente à la paroi circonférentielle, et dans laquelle la zone centrale possède de préférence une section transversale de S mm, S étant compris entre 14 et 24, de préférence entre 16 et 22, et de préférence entre 18 et 20, et le diamètre extérieur de la partie qui de la couche filtrante qui forme une limite de l'espace interne ayant une section transversale d'environ 28 à 30 mm, et/ou le diamètre de l'espace intérieur près de la feuille étant de préférence d'environ 28 à 30 mm.

20. Capsule selon la revendication 1 ou 2, dans laquelle la couche filtrante possède une forme de bande ayant deux extrémités opposées adjacentes à la paroi circonférentielle, et deux côtés opposés situés chacun à une distance de la paroi circonférentielle.

21. Capsule selon l'une quelconque des revendications précédentes, dans laquelle la couche filtrante possède une épaisseur de T mm, T étant compris entre 0,05 et 0,01, à l'exclusion de 0,01, ou entre 0,01 et 1 ou entre 1 et 10, à l'exclusion de 1, de préférence entre 0,05 et 0,5, encore plus de préférence entre 0,05 et 0,2.

22. Capsule selon l'une quelconque des revendications précédentes, dans laquelle la couche filtrante comprend une pile de sous-couches filtrantes, chaque sous-couche filtrante étant en forme de feuille, la pile comprenant de préférence 2 à 6 sous-couches filtrantes.

23. Capsule selon l'une quelconque des revendications précédentes, dans laquelle la couche filtrante est divisée en morceaux de couche filtrante positionnés sur un plan parallèle à la feuille.

24. Système de préparation d'une quantité prédéterminée de boisson adaptée à la consommation à l'aide d'un produit extractible, comprenant :
une capsule interchangeable (2) selon l'une quelconque des revendications précédentes, et
un appareil (4) comprenant un réceptacle (6) afin de maintenir la capsule interchangeable, et un dispositif de distribution de liquide (5) destiné à fournir une quantité de liquide, tel que de l'eau, sous pression, à la capsule interchangeable,
dans lequel le dispositif de distribution de liquide (5) est prévu pour fournir le liquide au produit extractible par le biais du fond (16) afin de former la boisson,
dans lequel le réceptacle (6) comprend une surface de support (10), et dans lequel la capsule (2) est prévue pour venir au moins partiellement en butée contre la surface de support (10) afin d'évacuer la boisson préparée de la capsule (2) par le biais du couvercle (20, 20', 20", 20"') et de la surface de support (10),
dans lequel le système comprend une évacuation (32) qui, pendant l'utilisation, est en communication de fluide avec le couvercle (20, 20', 20", 20"') afin d'évacuer la boisson préparée de la capsule (2) et de fournir la boisson à un récipient tel qu'une tasse.

25. Système selon la revendication 24, dans lequel le liquide est fourni sous une pression de 4 à 20 bar, de préférence de 9 à 18 bar.
